(19) Europäisches Patentamt
European Patent Office
Office européen des brevets

(11) EP 3 554 240 B1

(12) # EUROPEAN PATENT SPECIFICATION

(45) Date of publication and mention of the grant of the patent:
**07.07.2021 Bulletin 2021/27**

(21) Application number: **17811334.6**

(22) Date of filing: **13.12.2017**

(51) Int Cl.:
***A01N 37/52*** *(2006.01)*
***A01P 3/00*** *(2006.01)*
***A01P 5/00*** *(2006.01)*
***A01N 25/32*** *(2006.01)*
***A01N 43/653*** *(2006.01)*
***A01N 45/02*** *(2006.01)*
***A01N 43/56*** *(2006.01)*
***A01N 43/40*** *(2006.01)*
***A01N 37/34*** *(2006.01)*
***A01N 47/14*** *(2006.01)*
***A01N 37/50*** *(2006.01)*

(86) International application number:
**PCT/EP2017/082554**

(87) International publication number:
**WO 2018/108977 (21.06.2018 Gazette 2018/25)**

(54) **ACTIVE COMPOUND COMBINATIONS**
WIRKSTOFFKOMBINATIONEN
COMBINAISONS DE COMPOSÉS ACTIFS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.12.2016 EP 16204160**

(43) Date of publication of application:
**23.10.2019 Bulletin 2019/43**

(73) Proprietors:
- **Bayer CropScience Aktiengesellschaft**
**40789 Monheim am Rhein (DE)**
- **Bayer Aktiengesellschaft**
**51373 Leverkusen (DE)**

(72) Inventors:
- **MONTAGNE, Cyril**
**69009 Lyon (FR)**
- **HILLEBRAND, Stefan**
**41462 Neuss (DE)**
- **ES-SAYED, Mazen**
**40746 Langenfeld (DE)**
- **GÖRTZ, Andreas**
**41541 Dormagen (DE)**
- **WACHENDORFF-NEUMANN, Ulrike**
**56566 Neuwied (DE)**

(74) Representative: **BIP Patents**
**c/o Bayer Intellectual Property GmbH**
**Alfred-Nobel-Straße 10**
**40789 Monheim am Rhein (DE)**

(56) References cited:
**EP-A1- 3 011 832**
**WO-A1-03/024219**
**WO-A1-2005/089547**
**WO-A1-2005/094582**
**WO-A1-2007/031507**
**WO-A1-2015/121231**
**WO-A2-2014/037314**
**US-A1- 2011 082 036**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 554 240 B1

## Description

The invention relates to active compound combinations, in particular within a composition, which comprises (A) a compound selected from the group consisting of (I-1) N'-(2-chloro-5-methyl-4-phenoxyphenyl)-N-ethyl-N-methylimidoformamide, (I-2) N'-[2-chloro-4-(2-fluorophenoxy)-5-methylphenyl]-N-ethyl-N-methylimidoformamide, and salts, N-oxides, metal complexes or stereoisomers thereof, and one or more fungicidal compounds (B). Moreover, the invention relates to a method for controlling the phytopathogenic fungi of plants, to the use of an active compound combination according to the invention for the treatment of one or more seeds, to a method for protecting one or more seeds and to the corresponding treated seed.

WO2000/046184 discloses the use of amidines, including N-methyl-N-methyl-N'-[(4-phenoxy)-2,5-xylyl]-formamidine, as fungicides.

WO2003/093224, WO2007/031512, WO2007/031513, WO2007/031523, WO2007/031524, WO2007/031526, WO2007/031527, WO2007/061966, WO2008/101682, WO2008/110279, WO2008/110280, WO2008/110281, WO2008/110312, WO2008/110313, WO2008/110314, WO2009/110315, WO2008/128639, WO2009/156098, WO2009/156074, WO2010/086118, WO2012/025450, WO2012/090969 and WO2014/157596 disclose the use of arylamidine derivatives as fungicides.

WO2007/031508 and WO2007/093227 disclose the use of arylamidine derivatives as fungicides and insecticides.

WO2003/024219 discloses fungicide compositions comprising at least one N2-phenylamidine derivative in combination with a further selected known active compound.

WO2004/037239 discloses antifungicidal medicaments based on N2-phenylamidine derivatives.

WO2005/089547, WO2005/120234, WO2012/146125, WO2013/136275, and WO2014/037314 disclose fungicide mixtures comprising at least one arylamidine derivative and a further selected known fungicide.

EP3011832 discloses active compound combinations comprising

(A) a compound of formula (I)

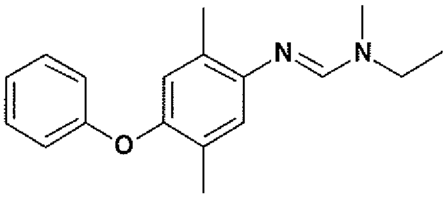

(I),

and salts, N-oxides, metal complexes or stereoisomers thereof,
and

(B) at least one further specified active compound.

US2011/0082036 discloses fungicide mixtures comprising at least one arylamidine derivative and a specified N-cycloalkylamide compound.

WO2005/094582 discloses fungicidal mixtures, containing in a synergistically effective quantity as active components the triazolopyrimidine compound 5-chloro-7-(4-methyl-piperidin-1-yl)-6-(2,4,6-trifluorophenyl)-[1,2,4]triazolo[1,5-a]pyrimidine and a specified phenylamidine derivative known from WO2000/046184.

WO2007/031507 and WO2015/121231 disclose fungicidal mixtures comprising at least one arylamidine derivative and two other selected known fungicides.

Since the environmental and economic requirements imposed on modern-day crop protection compositions are continually increasing, with regard, for example, to the spectrum of action, toxicity, plant compatibility, application rate, formation of residues, and favourable preparation ability, and since, furthermore, there may be challenges, for example, with resistance or sudden occurrence of new relevant pests, a constant task is to develop new compositions, in particular fungicidal agents, which in some areas at least help to fulfil the abovementioned requirements. The present invention provides active compound combinations/compositions which in some aspects at least achieve the stated objective.

Known active compound combinations comprising amidine compounds, e.g. known from WO2014/37314 have been proven to be fungicidally active but not to exhibit good plant compatibility.

It has now been found that the active compound combinations or compositions according to the invention

achieve a higher plant compatibility compared to known combinations comprising structurally similar amidine compounds. In addition, good fungicidal activity and a broad spectrum of action with respect to the phytopathogens for these active compound combinations or compositions according to the invention were observed.

"Plant compatibility" means the degree of morphological, physiological and/or genetic tolerance of a plant towards exogenous and endogenous signals. An example for an exogenous signal is the application of a substance for example the application of a fungicide or an active compound combination or composition comprising a fungicide. In particular, plant compatibility means the degree of morphological, physiological and/or genetic tolerance of a plant towards an applied fungicide or an active compound combination or composition comprising a fungicide. Such an application of a substance for example a fungicide comprises foliar application, as well as seed treatment and/or application to the plant through drenching. In particular, such an application refers to foliar application of the active compound combinations.

Preferably, plant compatibility in the context of this invention refers to soybean plants or cereal plants (i.e. cereals), such as wheat, barley, rye, triticale, sorghum/millet and oats. In particular, plant compatibility in the context of this invention refers to soybean plants.

"Morphological, physiological and/or genetic tolerance" means the capacity of a plant to endure the application of a substance for example a fungicide or an active compound combination or composition comprising a fungicide, without exhibiting a high degree of plant damages caused by such substances as a side effect. "Plant damages" in the context of the present invention are negative plant phenotypical symptoms, preferably leaf deformation, chlorosis, necrosis, shoot damage and/or stunting.

In the narrower sense, in the context of the present invention, "plant damages" relate to the negative plant phenotypical symptoms necrosis, shoot damage and/or stunting, in particular to the total plant damage caused by necrosis, shoot damage and stunting.

A higher morphological, physiological and/or genetic tolerance, i.e. a higher plant compatibility of a substance for example a fungicide or an active compound combination or composition comprising a fungicide means a decreased level of plant damages such as leaf deformation, chlorosis, necrosis, shoot damage or stunting. That means, the higher the morphological, physiological and/or genetic tolerance, i.e. the higher the plant compatibility, the better is the growth and reproductive potential of the plant despite the application of a substance such as a fungicide or an active compound combination or composition comprising a fungicide. Even slight improvements of the plant compatibility of certain substances can have large positive influences on plants used in agriculture, i.e. on crops. For example, such an improved growth and reproductive potential can lead to improved properties of the plant, for example a better developed root system associated with a better nutrient & water availability, a larger leaf area associated with a higher assimilation rate, formation of larger reproductive organs, and finally higher harvested yields. Also due to such an improved plant health, a better control of phytopathogenic microorganisms such as fungi is possible.

Thus, the use of the active compound combinations or compositions according to the invention contributes considerably to achieving the maximum productivity of crops and therefore finally also safeguards quality and yield within agriculture.

Accordingly, the present invention provides an active compound combination comprising:

(A) a compound selected from the group consisting of (I-1) N'-(2-chloro-5-methyl-4-phenoxyphenyl)-N-ethyl-N-methylimidoformamide, (I-2) N'-[2-chloro-4-(2-fluorophenoxy)-5-methylphenyl]-N-ethyl-N-methylimidoformamide, and salts, N-oxides, metal complexes or stereoisomers thereof;
and

(B) at least one further active compound selected from the group consisting of (1.002) difenoconazole, (1.005) fenpropidin, (1.006) fenpropimorph, (1.018) prothioconazole, (1.020) spiroxamine, (1.021) tebuconazole, (1.081) Mefentrifluconazole, (2.001) benzovindiflupyr, (2.002) bixafen, (2.005) fluopyram, (2.007) fluxapyroxad, (2.019) pydiflumetofen, (2.027) 3-(difluoromethyl)-1-methyl-N-(1,1,3-trimethyl-2,3-dihydro-1H-inden-4-yl)-1H-pyrazole-4-carboxamide, (2.030) 3-(difluoromethyl)-N-(7-fluoro-1,1,3-trimethyl-2,3-dihydro-1H-inden-4-yl)-1-methyl-1H-pyrazole-4-carboxamide, (2.057) 2-(difhioromethyl)-N-(1,1-dimethyl-3-propyl-2,3-dihydro-1H-inden-4-yl)nicotinamide, (3.016) picoxystrobin, (3.020) trifloxystrobin, (3.025) (3S,6S,7R,8R)-8-benzyl-3-[({3-[(isobutyryloxy)methoxy]-4-methoxypyridin-2-yl}carbonyl)amino]-6-methyl-4,9-dioxo-1,5-dioxonan-7-yl 2-methylpropanoate, (3.026) 2-{2-[(2,5-dimethylphenoxy)methyl]phenyl}-2-methoxy-N-methylacetamide, (3.030) 1-(2-{[1-(4-chlorophenyl)pyrazol-3-yl]oxymethyl}-3-methylphenyl)-1,4-dihydro-4-methyl-5*H*-tetrazol-5-one, (5.004) chlorothalonil, (5.013) mancozeb, (5.018) propineb and (15.047) 3-(4,4-difluoro-3,3-dimethyl-3,4-dihydroisoquinolin-1-yl)quinoline.

The compound selected from the group consisting of (I-1) N'-(2-chloro-5-methyl-4-phenoxyphenyl)-N-ethyl-N-methylimidoformamide, (I-2) N'-[2-chloro-4-(2-fluorophenoxy)-5-methylphenyl]-N-ethyl-N-methylimidoformamide, belongs to the group of compounds of the formula (I)

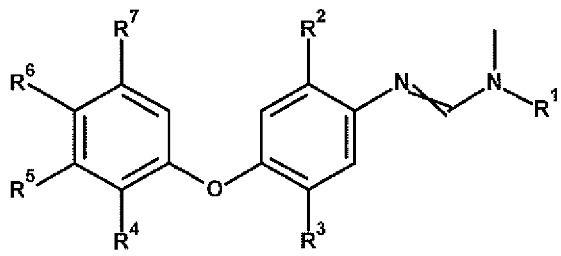

(I),

in which

| | |
|---|---|
| $R^1$ | is selected from the group consisting of methyl, ethyl and isopropyl |
| $R^2$ | is selected from the group consisting of halogen, methyl, cyano and halomethyl; |
| $R^3$ | is selected from the group consisting of methyl, halomethyl, cyano and halogen; |
| $R^4$ | is selected from the group consisting of hydrogen, halogen, methyl, cyano and halomethyl; |
| $R^5$ | is selected from the group consisting of hydrogen and halogen; |
| $R^6$ and $R^7$ | are individually from another selected from the group consisting of hydrogen and halogen. |

The "crossed line" representation of the N-C double bond in formula (I) reflects the possible cis/trans stereochemistry of this bond.

In the definitions of the symbols given in the above formulae, collective terms were used which are generally representative of the following substituents:

Hydrogen: Preferably, the definition of hydrogen encompasses also isotopes of hydrogen, preferably deuterium and tritium, more preferably deuterium.

Halogen: (also in combinations such as haloalkyl, haloalkoxy etc.) fluorine, chlorine, bromine and iodine, and preferably fluorine, chlorine, bromine and more preferably fluorine, chlorine;

Alkyl: (including in combinations such as alkylthio, alkoxy etc.) saturated, straight-chain or branched hydrocarbyl radicals having 1 to 8 carbon atoms, for example $C_1$-$C_6$-alkyl, such as methyl, ethyl, propyl, 1-methylethyl, butyl, 1-methylpropyl, 2-methylpropyl, 1,1-dimethylethyl, pentyl, 1-methylbutyl, 2-methylbutyl, 3-methylbutyl, 2,2-dimethylpropyl, 1-ethylpropyl, hexyl, 1,1-dimethylpropyl, 1,2-dimethylpropyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl and 1-ethyl-2-methylpropyl; heptyl, octyl.

Haloalkyl: (including in combinations such as haloalkylthio, haloalkoxy etc.) straight-chain or branched alkyl groups having 1 to 8 carbon atoms (as specified above), where some or all of the hydrogen atoms in these groups may be replaced by halogen atoms as specified above, for example $C_1$-$C_3$-haloalkyl such as chloromethyl, bromomethyl, dichloromethyl, trichloromethyl, fluoromethyl, difluoromethyl, trifluoromethyl, chlorofluoromethyl, dichlorofluoromethyl, chlorodifluoromethyl, 1-chloroethyl, 1-bromoethyl, 1-fluoroethyl, 2-fluoroethyl, 2,2-difluoroethyl, 2,2,2-trifluoroethyl, 2-chloro-2-fluoroethyl, 2-chloro-2-difluoroethyl, 2,2-dichloro-2-fluoroethyl, 2,2,2-trichloroethyl, pentafluoroethyl and 1,1,1-trifluoroprop-2-yl.

Halomethyl: a methyl group, where some or all of the hydrogen atoms in these group may be replaced by halogen atoms as specified above, for example (but not limited to) chloromethyl, bromomethyl, dichloromethyl, trichloromethyl, fluoromethyl, difluoromethyl, trifluoromethyl, chlorofluoromethyl, dichlorofluoromethyl, chlorodifluoromethyl, and preferably trifluoromethyl.

Depending on the nature of the substituents, the compounds of formula (I) can be present as mixtures of different possible isomeric forms, in particular of stereoisomers, such as, for example, E and Z, threo and erythro, and also optical isomers, and, if appropriate, also of tautomers. If applicable, compounds of formula (I) comprise both the E and the Z isomers, and also the threo and erythro, and the optical isomers, any mixtures of these isomers, and the possible tautomeric forms.

Depending on the nature of the substituents, the compounds of formula (I) can exist in one or more optical or chiral isomer forms depending on the number of asymmetric centres in the compound. The invention thus relates equally to combinations comprising any of the optical isomers and their racemic or scalemic *mixtures* (the term "scalemic"

denotes a mixture of enantiomers in different proportions) and mixtures of all the possible stereoisomers, in all proportions. The diastereoisomers and/or the optical isomers can be separated according to the methods which are known per se by the man ordinary skilled in the art.

Depending on the nature of the substituents, the compounds of formula (I) can also exist in one or more geometric isomer forms depending on the number of double bonds in the compound. The invention thus relates equally to all geometric isomers and to all possible mixtures, in all proportions. The geometric isomers can be separated according to general methods, which are known per se by the man ordinary skilled in the art.

Depending on the nature of the substituents, the compounds of formula (I) can also exist in one or more geometric isomer forms depending on the relative position (syn/anti or cis/trans) of the substituents of ring B. The invention thus relates equally to all syn/anti (or cis/trans) isomers and to all possible syn/anti (or cis/trans) mixtures, in all proportions. The syn/anti (or cis/trans) isomers can be separated according to general methods, which are known per se by the man ordinary skilled in the art.

The compounds of the formula (I) carry amidine groups which induce basic properties. Thus, these compounds can be reacted with acids to give salts.

Examples of inorganic acids are hydrohalic acids, such as hydrogen fluoride, hydrogen chloride, hydrogen bromide and hydrogen iodide, sulfuric acid, phosphoric acid and nitric acid, and acidic salts, such as $NaHSO_4$ and $KHSO_4$.

Suitable organic acids are, for example, formic acid, carbonic acid and alkanoic acids, such as acetic acid, trifluoroacetic acid, trichloroacetic acid and propionic acid, and also glycolic acid, thiocyanic acid, lactic acid, succinic acid, citric acid, benzoic acid, cinnamic acid, oxalic acid, alkylsulfonic acids (sulfonic acids having straight-chain or branched alkyl groups having 1 to 20 carbon atoms), arylsulfonic acids or - disulfonic acids (aromatic groups, such as phenyl and naphthyl, which carry one or two sulfonic acid groups), alkylphosphonic acids (phosphonic acids having straight-chain or branched alkyl groups having 1 to 20 carbon atoms), arylphosphonic acids or -diphosphonic acids (aromatic radicals, such as phenyl and naphthyl, which carry one or two phosphonic acid groups), where the alkyl and aryl groups may carry further substituents, for example p-toluenesulfonic acid, salicylic acid, p-aminosalicylic acid, 2-phenoxybenzoic acid, 2-acetoxybenzoic acid, etc.

The salts obtainable in this manner also have fungicidal properties.

*Illustration of synthesis of compounds of formula (I) and intermediates*

The compounds of formula (I) can be obtained by various routes in analogy to prior art processes known (see e.g. WO2000/046184 and WO2008/110313 and references therein) and by synthesis routes comprising at least one of the following steps (a) to (j) as shown schematically below:

(a) reaction of nitrobenzene derivatives of the formula (II) with phenol derivatives of the formula (III) according to the reaction scheme below:

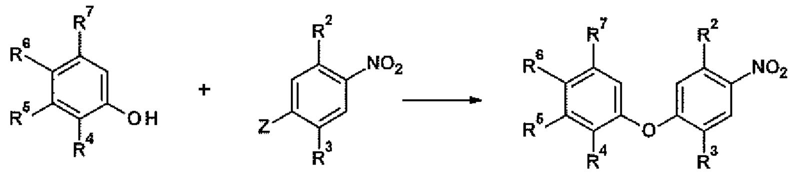

(III) (II) (VI)

(b) reaction of nitrophenol derivatives of the formula (V) with phenyl derivatives of the formula (IV) according to the reaction scheme below:

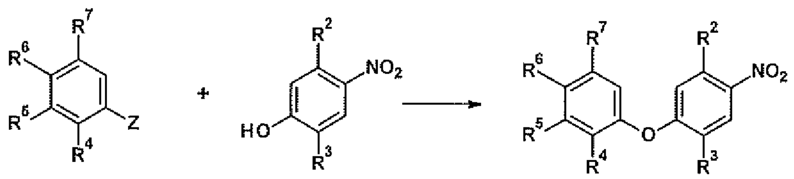

(IV) (V) (VI)

(c) reaction of anilines of the formula (VII) with phenols (II) according to the reaction scheme below:

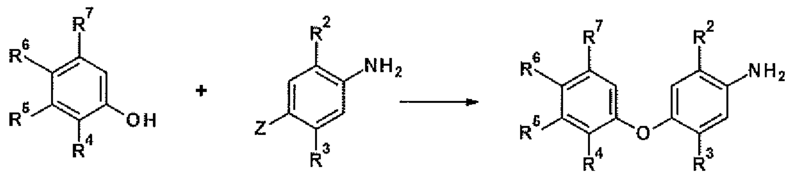

(II) (VII) (VIII)

(d) reaction of aminophenols of the formula (XII) with phenyl derivatives of the formula (IV) according to the reaction scheme below:

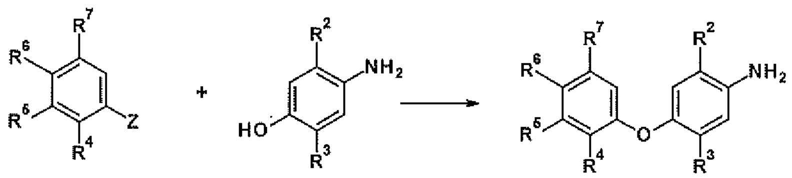

(IV) (XII) (VIII)

(e) reduction of the nitrophenyl ethers of the formula (VI) to aminophenyl ethers of the formula (VIII) according to the reaction scheme below:

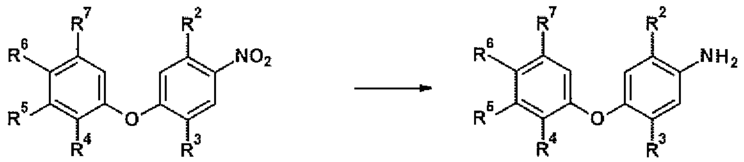

(VI) (VIII)

(f) reaction of the aminophenyl ethers of the formula (VIII) with

(i) aminoacetals of the formula (XIII) or

(ii) formamide of the formula (XIV) or

(iii) amine of the formula (XV) in the presence of ortho esters of the formula (XVI) according to the reaction scheme below:

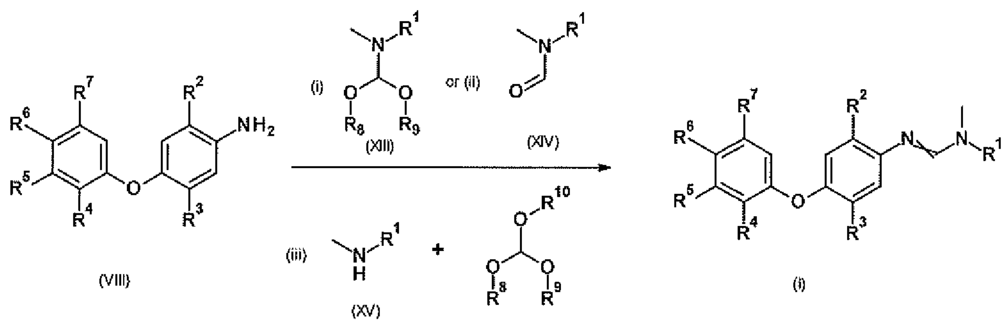


(VIII) (XIII) (XIV) (XV) (XVI) (i)

(g) reaction of the aminophenols of the formula (XII) with

(i) aminoacetals of the formula (XIII) or

(ii) formamide of the formula (XIV) or

(iii) amine of the formula (XV) in the presence of ortho esters of the formula (XVI) according to the reaction scheme below:

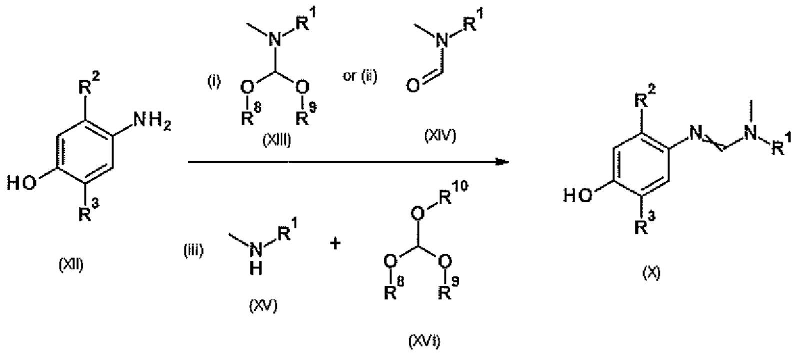

(XII) (XIII) (XIV) (XV) (XVI) (X)

(h) reaction of the anilines of the formula (VII) with

(i) aminoacetals of the formula (XIII) or

(ii) formamide of the formula (XIV) or

(iii) amine of the formula (XV) in the presence of ortho esters of the formula (XVI) according to the reaction scheme below:

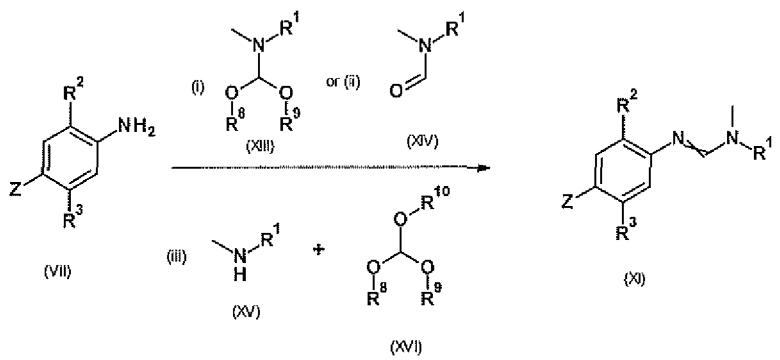

(VII) (XIII) (XIV) (XV) (XVI) (XI)

(i) reaction of amidines of the formula (XI) with phenol derivatives of the formula (II) according to the reaction scheme below:
(ii)

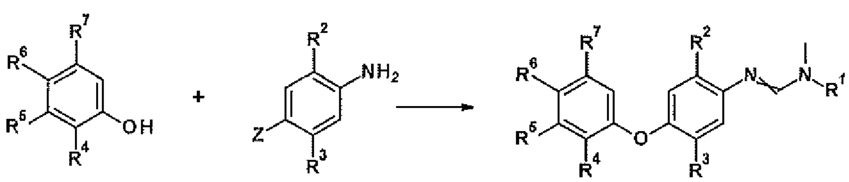


(X) (II) (I)

(j) reaction of amidines of the formula (X) with phenyl derivatives of the formula (IV) according to the reaction scheme below:

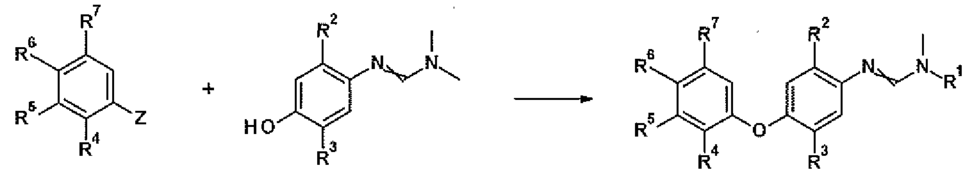

(X) (IV) (I)

where in the above schemes

Z is a leaving group;
$R_1$ to $R_7$ have the above meanings;
$R_8$ to $R_{10}$ independently of one another are selected from the group consisting of $C_{1-12}$-alkyl, $C_{2-12}$-alkenyl, $C_{2-12}$-alkynyl or $C_{5-18}$-aryl or $C_{7-19}$-arylalkyl, $C_{7-19}$-alkylaryl groups and in each case $R^8$ with $R^9$, $R^9$ with $R^{10}$ or $R^8$ with $R^{10}$ together with the atoms to which they are attached and if appropriate together with further carbon, nitrogen, oxygen or sulfur atoms may form a five-, six- or seven-membered ring.

*Step (a)*

In one embodiment according to the invention concerning Step (a), nitrobenzene derivatives of the formula (III) are reacted with derivatives of the formula (II) or the phenoxides formed therefrom in accordance with the reaction scheme above to give nitroaromatics of the above-given formula (VI).

Suitable leaving groups (Z) are all substituents having sufficient nucleofugicity under the prevailing reaction conditions. Examples of suitable leaving groups to be mentioned are halogens, triflate, mesylate, tosylate or $SO_2Me$.

The reaction is preferably carried out in the presence of a base.

Suitable bases are organic and inorganic bases which are usually used in such reactions. Preference is given to using bases which, for example, are selected from the group consisting of hydrides, hydroxides, amides, alkoxides, acetates, fluorides, phosphates, carbonates and bicarbonates of alkali metals or alkaline earth metals. Particular preference is given here to sodium amide, sodium hydride, lithium diisopropylamide, sodium methoxide, potassium *tert*-butoxide, sodium hydroxide, potassium hydroxide, sodium acetate, sodium phosphate, potassium phosphate, potassium fluoride, cesium fluoride, sodium carbonate, potassium carbonate, potassium bicarbonate, sodium bicarbonate and cesium carbonate. Furthermore, tertiary amines, such as, for example, trimethylamine, triethylamine, tributylamine, N,N-dimethylaniline, N,N-dimethylbenzylamine, pyridine, N-methylpiperidine, N-methylpyrolidone, N,N-dimethylaminopyridine, diazabicyclooctane (DABCO), diazabicyclononene (DBN) and diazabicycloundecene (DBU).

If appropriate, a catalyst chosen from the group consisting of palladium, copper and their salts or complexes may be used.

The reaction of the nitrobenzene derivative with the phenol derivative can be carried out neat or in a solvent; preferably, the reaction is carried out in a solvent selected from standard solvents which are inert under the prevailing reaction conditions.

Preference is given to aliphatic, alicyclic or aromatic hydrocarbons, such as, for example, petroleum ether, hexane, heptane, cyclohexane, methylcyclohexane, benzene, toluene, xylene or decalin; halogenated hydrocarbons, such as, for example, chlorobenzene, dichlorobenzene, dichloromethane, chloroform, carbon tetrachloride, dichloroethane or trichloroethane; ethers, such as, for example, diethyl ether, diisopropyl ether, methyl tert-butyl ether (MTBE), methyl tert-amyl ether, dioxane, tetrahydrofuran, 1,2-dimethoxyethane, 1,2-diethoxyethane or anisole; nitriles, such as, for example, acetonitrile, propionitrile, n- or isobutyronitrile or benzonitrile; amides, such as, for example, N,N-dimethylformamide (DMF), N,N-dimethylacetamide, N-methylformanilide, N-methylpyrrolidone (NMP) or hexamethylenephosphoric triamide; or mixtures of these with water, and also pure water.

The reaction can be carried out under reduced pressure, at atmospheric pressure or under superatmospheric pressure and at temperatures of from -20 to 200°C; preferably, the reaction is carried out at atmospheric pressure and temperatures of from 50 to 150°C.

The nitrobenzene derivatives of the formula (III) are commercially available or can be prepared from commercially available precursors by or analogue to methods described in the literature (for example WO2008/110314).

The phenol derivatives of the formula (II) are commercially available or can be prepared according to methods described in the literature

*Step (b)*

In *an* alternative embodiment according to the invention, nitrophenol derivatives of the formula (V) or the phenoxides formed therefrom are reacted with phenyl derivatives of the formula (IV) in accordance with the reaction scheme above to give nitrophenyl ethers of the formula (VI).
With regard to the reaction conditions, the solvents, the catalysts, the substitution patterns of the nitrophenyl ether (VI) and the suitable leaving groups, reference may be made to step (a).
The nitrophenol derivatives of the formula (V) are commercially available or can be prepared from commercially available precursors by methods described in the literature (for example from corresponding nitrophenol derivatives by halogenation reaction: WO2009/140624).
The phenyl derivatives of the formula (IV) are commercially available or can be prepared according to methods described in the literature

*Step (c)*

In a further alternative embodiment according to the invention, aniline derivatives of the formula (VII) are reacted with phenol derivatives of the formula (II) or the phenoxides formed therefrom in accordance with the reaction scheme above to give aminophenyl ethers of the formula (VIII).
With regard to the reaction conditions, the solvents, the catalysts and the suitable leaving groups, reference may be made to step (a).

*Step (d)*

In a further alternative embodiment according to the invention, aminophenols of the formula (XII) are reacted with phenyl derivatives of the formula (IV) in accordance with the reaction scheme above to give aminophenyl ethers of the formula (VIII).
With regard to the reaction conditions, the solvents, the catalysts, the substitution patterns of the aminophenyl ether (VIII) and the suitable leaving groups, reference may be made to steps (a) and (c).

*Step (e)*

The nitrophenyl ethers of the formula (VI) obtained in steps (a) and (b) can be reduced in accordance with the reaction scheme above to give the aminophenyl ethers of the formula (VIII).
The reduction according to step (e) can be carried out by any methods for reducing nitro groups described in the prior art.
Preferably, the reduction is carried out using tin chloride, as described in WO2000/46184. However, alternatively, the reduction can also be carried out by using iron in the presence of hydrochloric acid or hydrogen gas, if appropriate in the presence of suitable hydrogenation catalysts, such as, for example, Raney nickel or Pd/C. The reaction conditions have already been described in the prior art and are familiar to the person skilled in the art.
If the reduction is carried out in the liquid phase, the reaction should take place in a solvent inert to the prevailing reaction conditions. One such solvent is, for example, toluene, methanol, or ethanol.

*Step (f)*

The conversion of the anilines of the formula (VIII) into the amidines of the formula (I) according to the invention according to step (f) can be carried out, as shown above in schema (I), using different alternative methods employing

(i) aminoacetals of the formula (XIII) or

(ii) formamides of the formula (XIV) or

(iii) amines of the formula (XV) in the presence of ortho esters of the formula (XVI)

according to the reaction scheme above.
The individual alternative embodiments (i) to (iii) of the process are briefly illustrated below:

(i) According to one embodiment according to the invention, shown in scheme (I) as step (i), the aminophenyl ethers of the formula (VIII) are reacted with aminoacetals of the formula (XIII), where $R_8$ and $R_9$ are selected from the group

consisting of $C_{1-8}$-alkyl groups, preferably from $C_{1-6}$-alkyl groups, particularly preferably from $C_{1-4}$-alkyl groups and together with the oxygen atoms to which they are attached may form a five- or six-membered ring, to give the phenoxyphenylamidines of the formula (I) comprised in the active compound combinations according to the invention. The reaction according to step (i) is preferably carried out in the absence of a base or an acid.

(ii) In an alternative embodiment according to the invention, shown in scheme (I) as step (ii), the aminophenyl ethers of the formula (VIII) are reacted with a formamide of the formula (XIV) to give the phenoxyphenylamidines comprised in the active compound combinations according to the invention.

The reaction according to step (ii) is, if appropriate, carried out in the presence of a halogenating agent. Suitable halogenating agents are, for example, selected from the group consisting of $PCl_5$, $PCl_3$, $POCl_3$ or $SOCl_2$.

Moreover, the reaction may alternatively be carried out in the presence of a condensing agent.

Suitable condensing agents are those usually employed for forming amide bonds; acid halide formers, such as, for example, phosgene, phosphorus tribromide, phosphorus trichloride, phosphorus pentachloride, phosphorus oxytrichloride or thionyl chloride; anhydride formers, such as, for example, chloroformate, methyl chloroformate, isopropyl chloroformate, isobutyl chloroformate or methanesulfonyl chloride; carbodiimines, such as, for example, N,N'-dicyclohexylcarbodiimine (DCC) or other customary condensing agents, such as, for example, phosphorus pentoxide, polyphosphoric acid, N,N'-carbodiimidazole, 2-ethoxy-N-ethoxycarbonyl-1,2-dihydroquinoline (EEDQ), triphenylphosphine/carbon tetrachloride or bromotripyrrolidinophosphonium hexafluorophosphate may be mentioned by way of examples.

The reaction according to step (ii) is preferably carried out in a solvent selected from standard solvents which are inert under the prevailing reaction conditions. Preference is given to aliphatic, alicyclic or aromatic hydrocarbons, such as, for example, petroleum ether, hexane, heptane, cyclohexane, methylcyclohexane, benzene, toluene, xylene or decalin; halogenated hydrocarbons, such as, for example, chlorobenzene, dichlorobenzene, dichloromethane, chloroform, carbon tetrachloride, dichloroethane or trichloroethane; ethers, such as, for example, diethyl ether, diisopropyl ether, methyl tert-butyl ether (MTBE), methyl tert-amyl ether, dioxane, tetrahydrofuran, 1,2-dimethoxyethane, 1,2-diethoxyethane or anisole; nitriles, such as, for example, acetonitrile, propionitrile, n- or isobutyronitrile or benzonitrile; amides, such as, for example, N,N-dimethylformamide (DMF), N,N-dimethylacetamide, N-methylformanilide, N-methylpyrrolidone (NMP) or hexamethylenephosphoric triamide; esters, such as, for example, methyl acetate or ethyl acetate; sulfoxides, such as, for example, dimethyl sulfoxide (DMSO); sulfones, such as, for example, sulfolane; alcohols, such as, for example, methanol, ethanol, n- or isopropanol, n-, iso-, sec- or tert-butanol, ethanediol, propane-1,2-diol, ethoxyethanol, methoxyethanol, diethylene glycol monomethyl ether, diethylene glycol monoethyl ether or mixtures of these.

(iii) According to a further alternative embodiment according to the invention shown in scheme (I) as step (iii), the aminophenyl ethers of the formula (VIII) are reacted with an amine of the formula (XV) in the presence of ortho esters of the formula (XVI), in which $R_8$ to $R_{10}$ independently of one another are selected from the group consisting of $C_{1-8}$-alkyl groups, preferably from $C_{2-6}$-alkyl groups, particularly preferably from $C_{3-5}$-alkyl groups and together with the oxygen atoms to which they are attached may form a five- or six-membered ring, to give the phenoxyphenylamidines comprised in the active compound combinations according to the invention.

The reaction according to step (iii) is preferably carried out in a solvent selected from standard solvents which are inert under the prevailing reaction conditions. Preference is given to aliphatic, alicyclic or aromatic hydrocarbons, such as, for example, petroleum ether, hexane, heptane, cyclohexane, methylcyclohexane, benzene, toluene, xylene or decalin; halogenated hydrocarbons, such as, for example chlorobenzene, dichlorobenzene, dichloromethane, chloroform, carbon tetrachloride, dichloroethane or trichloroethane; ethers, such as, for example, diethyl ether, diisopropyl ether, methyl tert-butyl ether (MTBE), methyl tert-amyl ether, dioxane, tetrahydrofuran, 1,2-dimethoxyethane, 1,2-diethoxyethane or anisole; nitriles, such as, for example, acetonitrile, propionitrile, n- or isobutyronitrile or benzonitrile; amides, such as, for example, N,N-dimethylformamide (DMF), N,N-dimethylacetamide, N-methylformanilide, N-methylpyrrolidone (NMP) or hexamethylene phosphoric triamide; esters, such as, for example, methyl acetate or ethyl acetate; sulfoxides, such as, for example, dimethyl sulfoxide (DMSO); sulfones, such as, for example, sulfolane; alcohols, such as, for example, methanol, ethanol, n- or isopropanol, n-, iso-, sec- or tert-butanol, ethanediol, propane-1,2-diol, ethoxyethanol, methoxyethanol, diethylene glycol monomethyl ether, diethylene glycol monoethyl ether; or mixtures of these with water, and also pure water.

*Step (g)*

In an alternative embodiment according to the invention, it is already possible to react the aminophenols of the formula (XII) with

(i) aminoacetals of the formula (XIII) or

(ii) formamides of the formula (XIV) or

(iii) amines of the formula (XV) in the presence of ortho esters of the formula (XVI)

in accordance with the reaction scheme above to give amidines of the formula (X):
With regard to the reaction conditions, solvents, catalysts and substitution patterns of the amidines (X), reference may be made to step (f).
The further conversion of the amidines of the formula (X) into the molecules of the formula (I) comprised in the active compound combinations according to the invention can be carried out, for example, as described in step (j).

*Step (h)*

In an alternative embodiment according to the invention, it is possible to react the aniline derivatives of the formula (VII) with

(i) aminoacetals of the formula (XIII) or

(ii) formamides of the formula (XIV) or

(iii) amines of the formula (XV) in the presence of ortho esters of the formula (XVI)

in accordance with the reaction scheme above to give amidines of the formula (XI).
With regard to the reaction conditions, solvents, catalysts and substitution patterns of the amidines (XI), reference may be made to step (f).
The further conversion of the amidines of the formula (XI) into the molecules of the formula (I) comprised in the active compound combinations according to the invention can be carried out, for example, as described in step (i).

*Step* (i)

According to a further embodiment according to the invention, the amidines of the formula (XI) obtainable from step (h) can be reacted with phenol derivatives of the formula (II) or the phenoxides formed therefrom to give the molecules of the formula (I) comprised in the active compound combinations according to the invention, in accordance with the reaction scheme above.
With regard to the reaction conditions, solvents, catalysts, substitution patterns of the amidines (I), reference may be made to step s (a) and (c).

Step (j)

According to a further embodiment according to the invention, the amidines of the formula (X) obtainable from step (g) can be reacted with phenyl derivatives of the formula (IV) to give the molecules of the formula (I) comprised in the active compound combinations according to the invention, in accordance with the reaction scheme above.
With regard to the reaction conditions, solvents, catalysts and substitution patterns of the amidines (I), reference may be made to steps (a) and (c).
In connection with the processes for preparing the phenoxyphenylamidines of the formula (I), the following combinations of reaction steps are to be regarded as advantageous: steps (a), (e) and (f); steps (b), (e) and (f); steps (c) and (f); steps (d) and (f); steps (h) and (i) and/or steps (g) and (j).
The preparation of the phenoxyphenylamidines comprised in the active compound combinations according to the invention is if appropriate carried out without isolation of the intermediates.
The final purification of the phenoxyphenylamidines can if appropriate be carried out using customary purification methods. Preferably, purification is carried out by crystallization.

**Preparation Examples**

The preparation and the use of the compounds of the formula **(I)** is illustrated by the examples which follow.
**General notes:** Unless stated otherwise, all chromatographic purification and separation steps are carried out on silica gel and using a solvent gradient from 0:100 ethyl acetate/cyclohexane to 100:0 ethyl acetate/cyclohexane.

**Preparation of compounds of the formula N'-(2-bromo-5-methyl-4-phenoxyphenyl)-N-ethyl-N-methylimidoformamide (1-4)**

**Step 1**

**1-bromo-4-methyl-2-nitro-5-phenoxybenzene**

500 mg (2.14 mmol) 1-bromo-5-fluoro-4-methyl-2-nitrobenzene and 591 mg (4.27 mmol) potassium carbonate were suspended in 10 ml of dry DMF and heated to 90 °C. To this solution was added drop wise over 1 h a solution of 200 mg (2.14 mmol) phenol in 10 ml of dry DMF. The reaction was finished after 2.5 h. The mixture was concentrated under reduced pressure, followed by addition of water and filtration of the product yielding 565 mg of 1-bromo-4-methyl-2-nitro-5-phenoxybenzene.

**Step 2**

**2-bromo-5-methyl-4-phenoxyaniline**

500 mg (1.62 mmol) 1-bromo-4-methyl-2-nitro-5-phenoxybenzene was dissolved in 5 ml EtOH followed by addition of 1.8 g (8.11 mmol) tin-dichloride dihydrat (SnCl2*2 H2O). The mixture was refluxed for 1 h, cooled to room temperature, followed by addition of ice and adjustment of the pH to 10 by slow addition of sodium carbonate. The water phase was extracted with ethyl acetate, the organic phase dried over MgSO4, then concentrated in vacuum and the crude product chromatographed via Combiflash (40 g silica gel, gradient cyclohexane/ethyl acetate). 350 mg 2-bromo-5-methyl-4-phenoxyaniline was obtained.

**Step 3**

**N'-(2-bromo-5-methyl-4-phenoxyphenyl)-N-ethyl-N-methylimidoformamide (I-4)**

350 mg (1.26 mmol) 2-bromo-5-methyl-4-phenoxyaniline and 218 mg (1.64 mmol) N-(dimethoxymethyl)-N-methylethanamine were dissolved in 10 ml of dry toluene and heated for 12 h at 80°C. The mixture was cooled to room temperature, concentrated under reduced pressure and purified by chromatography via Combiflash (40 g silica gel, solvent: gradient cyclohexane/ethyl acetate) to yield 280 mg N'-(2-bromo-5-methyl-4-phenoxyphenyl)-N-ethyl-N-methylimidoformamide.

LogP-value of N'-(2-bromo-5-methyl-4-phenoxyphenyl)-N-ethyl-N-methylimidoformamide: 4,38[a]; 4,33[b].

Measurement of LogP values was performed according to EEC directive 79/831 Annex V.A8 by HPLC (High Performance Liquid Chromatography) on reversed phase columns with the following methods:

[a] LogP value is determined by measurement of LC-UV, in an acidic range, with 0.1% formic acid in water and acetonitrile as eluent (linear gradient from 10% acetonitrile to 95% acetonitrile).

[b] LogP value is determined by measurement of LC-UV, in a neutral range, with 0,001 molar ammonium acetate solution in water and acetonitrile as eluent (linear gradient from 10% acetonitrile to 95% acetonitrile).

Calibration was done with straight-chain alkan2-ones (with 3 to 16 carbon atoms) with known LogP values (measurement of LogP values using retention times with linear interpolation between successive alkanones). Lambda-max-values were determined using UV-spectra from 200 nm to 400 nm and the peak values of the chromatographic signals.

**NMR-Peak lists**

1H-NMR data of selected examples are written in form of 1H-NMR-peak lists. To each signal peak are listed the δ-value in ppm and the signal intensity in round brackets. Between the δ-value - signal intensity pairs are semicolons as delimiters.

The peak list of an example has therefore the form:

$\delta_1$ (intensity$_1$); $\delta_2$ (intensity$_2$);........; $\delta_i$ (intensity$_i$);......; $\delta_n$ (intensity$_n$)

Intensity of sharp signals correlates with the height of the signals in a printed example of a NMR spectrum in cm and shows the real relations of signal intensities. From broad signals several peaks or the middle of the signal and their relative intensity in comparison to the most intensive signal in the spectrum can be shown.

For calibrating chemical shift for 1H spectra, we use tetramethylsilane and/or the chemical shift of the solvent used, especially in the case of spectra measured in DMSO. Therefore, in NMR peak lists, tetramethylsilane peak can occur but not necessarily.

The 1H-NMR peak lists are similar to classical 1H-NMR prints and contains therefore usually all peaks, which are listed at classical NMR-interpretation.

Additionally, they can show like classical 1H-NMR prints signals of solvents, stereoisomers of the target compounds, which are also object of the invention, and/or peaks of impurities.

To show compound signals in the delta-range of solvents and/or water the usual peaks of solvents, for example peaks of DMSO in DMSO-$D_6$ and the peak of water are shown in our 1H-NMR peak lists and have usually on average a high intensity.

The peaks of stereoisomers of the target compounds and/or peaks of impurities have usually on average a lower intensity than the peaks of target compounds (for example with a purity >90%).

Such stereoisomers and/or impurities can be typical for the specific preparation process. Therefore, their peaks can help to recognize the reproduction of our preparation process via "side-products-fingerprints".

An expert, who calculates the peaks of the target compounds with known methods (MestreC, ACD-simulation, but also with empirically evaluated expectation values) can isolate the peaks of the target compounds as needed optionally using additional intensity filters. This isolation would be similar to relevant peak picking at classical 1H-NMR interpretation.

Further details of NMR-data description with peak lists you find in the publication "Citation of NMR Peaklist Data within Patent Applications" of the Research Disclosure Database Number 564025.

| |
|---|
| Example (I-1): $^1$H-NMR (600.1 MHz, $d_6$-DMSO):<br>$\delta$= 7.755 (1.1); 7.642 (0.4); 7.357 (0.4); 7.353 (3.0); 7.350 (I.1); 7.345 (0.6); 7.341 (4.2); 7.339 (4.2); 7.335 (0.7); 7.330 (1.3); 7.326 (3.4); 7.322 (0.5); 7.068 (1.5); 7.066 (1.0); 7.055 (2.8); 7.045 (0.8); 7.043 (1.3); 7.042 (0.8); 6.954 (1.2); 6.931 (7.5); 6.869 (3.6); 6.867 (4.4); 6.854 (4.1); 6.853 (3.5); 3.454 (0.4); 3.443 (0.5); 3.368 (0.5); 3.357 (1.0); 3.346 (1.0); 3.335 (12.8); 3.001 (1.3); 2.935 (3.5); 2.512 (1.4); 2.509 (3.2); 2.506 (4.4); 2.503 (3.2); 2.500 (1.6); 2.075 (16.0); 1.158 (1.5); 1.146 (3.3); 1.136 (2.2) |
| Example (I-2): $^1$H-NMR (400.0 MHz, $d_6$-DMSO):<br>$\delta$= 7.750 (1.4); 7.637 (0.6); 7.386 (0.9); 7.379 (0.6); 7.373 (0.8); 7.368 (0.7); 7.361 (1.2); 7.357 (1.1); 7.352 (0.8); 7.350 (0.7); 7.339 (1.0); 7.333 (1.1); 7.170 (0.5); 7.157 (2.2); 7.151 (1.9); 7.143 (2.5); 7.138 (2.3); 7.132 (2.4); 7.126 (1.2); 7.120 (0.9); 7.107 (0.3); 6.958 (1.6); 6.937 (0.7); 6.907 (0.9); 6.900 (0.6); 6.895 (0.8); 6.883 (1.3); 6.867 (0.7); 6.861 (0.8); 6.850 (5.7); 3.446 (0.5); 3.429 (0.6); 3.376 (0.6); 3.359 (1.2); 3.340 (1.4); 3.328 (27.2); 2.999 (1.7); 2.926 (4.4); 2.525 (0.7); 2.512 (14.1); 2.507 (28.3); 2.503 (37.5); 2.498 (28.2); 2.494 (14.5); 2.130 (16.0); 1.161 (1.6); 1.144 (3.5); 1.127 (2.4); 0.008 (1.7); 0.000 (43.5); -0.009 (1.8) |

*Further active compounds*

The active compound combinations according to the invention comprise (B) at least one further active compound selected from the group consisting of (1.002) difenoconazole, (1.005) fenpropidin, (1.006) fenpropimorph, (1.018) prothioconazole, (1.020) spiroxamine, (1.021) tebuconazole, (1.081) Mefentrifluconazole, (2.001) benzovindiflupyr, (2.002) bixafen, (2.005) fluopyram, (2.007) fluxapyroxad, (2.019) pydiflumetofen, (2.027) 3-(difluoromethyl)-1-methyl-N-(1,1,3-trimethyl-2,3-dihydro-1H-inden-4-yl)-1H-pyrazole-4-carboxamide, (2.030) 3-(difluoromethyl)-N-(7-fluoro-1,1,3-trimethyl-2,3-dihydro-1H-inden-4-yl)-1-methyl-1H-pyrazole-4-carboxamide, (2.057) 2-(difluoromethyl)-N-(1,1-dimethyl-3-propyl-2,3-dihydro-1H-inden-4-yl)nicotinamide, (3.016) picoxystrobin, (3.020) trifloxystrobin, (3.025) (3S,6S,7R,8R)-8-benzyl-3-[({3-[(isobutyryloxy)methoxy]-4-methoxypyridin-2-yl}carbonyl)amino]-6-methyl-4,9-dioxo-1,5-dioxonan-7-yl 2-methylpropanoate, (3.026) 2-{2-[(2,5-dimethylphenoxy)methyl]phenyl}-2-methoxy-N-methylacetamide, (3.030) 1-(2-{[1-(4-chlorophenyl)pyrazol-3-yl]oxymethyl}-3-methylphenyl)-1,4-dihydro-4-methyl-5*H*-tetrazol-5-one, (5.004) chlorothalonil, (5.013) mancozeb, (5.018) propineb and (15.047) 3-(4,4-difluoro-3,3-dimethyl-3,4-dihydroisoquinolin-1-yl)quinoline.

All named mixing partners can, if their functional groups enable this, optionally form salts with suitable bases or acids.

Where a compound (A) or a compound (B) can be present in tautomeric form, such a compound is understood hereinabove and hereinbelow also to include, where applicable, corresponding tautomeric forms, even when these are not specifically mentioned in each case.

The active ingredients specified herein by their Common Name are known and described, for example, in The Pesticide Manual (16th Ed.British Crop Protection Council) or can be searched in the internet (e.g. www.alanwood.net/pesticides).

The active compound combinations according to the invention comprise (B) at least one further active compound selected from:

(1.002) difenoconazole, (1.005) fenpropidin, (1.006) fenpropimorph, (1.018) prothioconazole, (1.020) spiroxamine, (1.021) tebuconazole, (1.081) Mefentrifluconazole,

(2.001) benzovindiflupyr, (2.002) bixafen, (2.005) fluopyram, (2.007) fluxapyroxad, (2.019) pydiflumetofen, (2.027) 3-(difluoromethyl)-1-methyl-N-(1,1,3-trimethyl-2,3-dihydro-1H-inden-4-yl)-1H-pyrazole-4-carboxamide, (2.030) 3-(difluoromethyl)-N-(7-fluoro-1,1,3-trimethyl-2,3-dihydro-1H-inden-4-yl)-1-methyl-1H-pyrazole-4-carboxamide, (2.057) 2-(difluoromethyl)-N-(1,1-dimethyl-3-propyl-2,3-dihydro-1H-inden-4-yl)nicotinamide,

(3.016) picoxystrobin, (3.020) trifloxystrobin, (3.025) (3S,6S,7R,8R)-8-benzyl-3-[({3-[(isobutyryloxy)methoxy]-4-methoxypyridin-2-yl}carbonyl)amino]-6-methyl-4,9-dioxo-1,5-dioxonan-7-yl 2-methylpropanoate, (3.026) 2-{2-[(2,5-dimethylphenoxy)methyl]phenyl}-2-methoxy-N-methylacetamide, (3.030) 1-(2-{[1-(4-chlorophenyl)pyrazol-3-yl]oxymethyl}-3-methylphenyl)-1,4-dihydro-4-methyl-5*H*-tetrazol-5-one,

(5.004) chlorothalonil, (5.013) mancozeb, (5.018) propineb, and

(15.047) 3-(4,4-difluoro-3,3-dimethyl-3,4-dihydroisoquinolin-1-yl)quinoline.

Preferred active compound combinations according to the invention comprise (B) comprise at least one further active compound selected from:

(1.002) difenoconazole, (1.018) prothioconazole, (1.021) tebuconazole,

(2.001) benzovindiflupyr, (2.002) bixafen, (2.005) fluopyram, (2.027) 3-(difluoromethyl)-1-methyl-N-(1,1,3-trimethyl-2,3-dihydro-1H-inden-4-yl)-1H-pyrazole-4-carboxamide,

(3.016) picoxystrobin, (3.020) trifloxystrobin,

(5.004) chlorothalonil, (5.013) mancozeb and (5.018) propineb.

Further preferred active compound combinations according to the invention comprise (B) at least one further active compound (2.027) 3-(difluoromethyl)-1-methyl-N-(1,1,3-trimethyl-2,3-dihydro-1H-inden-4-yl)-1H-pyrazole-4-carboxamide.

The following combinations exemplify specific embodiments of the active compound combination and/or composition according to the present invention.

Most preferred combinations are selected from the group (G1-2) consisting of the following active compound combinations:
(I-1) + (1.002), (I-1) + (1.005), (I-1) + (1.006), (I-1) + (1.018), (I-1) + (1.020), (I-1) + (1.021), (I-1) + (1.081), (I-1) + (2.001), (I-1) + (2.002), (I-1) + (2.005), (I-1) + (2.007), (I-1) + (2.019), (I-1) + (2.027), (I-1) + (2.030), (I-1) + (2.057), (I-1) + (3.016), (I-1) + (3.020), (I-1) + (3.025), (I-1) + (3.026), (I-1) + (3.030), (I-1) + (5.004), (I-1) + (5.013), (I-1) + (5.018), (I-1) + (15.047).

Most preferred combinations are also selected from the group (G2-2) consisting of the following active compound combinations:
(I-2) + (1.002), (I-2) + (1.005), (I-2) + (1.006), (I-2) + (1.018), (I-2) + (1.020), (I-2) + (1.021), (I-2) + (1.081), (I-2) + (2.001), (I-2) + (2.002), (I-2) + (2.005), (I-2) + (2.007), (I-2) + (2.019), (I-2) + (2.027), (I-2) + (2.030), (I-2) + (2.057), (I-2) + (3.016), (I-2) + (3.020), (I-2) + (3.025), (I-2) + (3.026), (I-2) + (3.030), (I-2) + (5.004), (1-2) + (5.013), (I-2) + (5.018), (I-2) + (15.047).

Further most preferred combinations are selected from the group (G1-3) consisting of the following active compound combinations:
(I-1) + (1.002), (I-1) + (1.018), (I-1) + (1.021), (I-1) + (2.001), (I-1) + (2.002), (I-1) + (2.005), (I-1) + (2.027), (1-1) + (3.016), (I-1) + (3.020), (I-1) + (5.004), (I-1) + (5.013), (I-1) + (5.018).

Further most preferred combinations are selected from the group (G2-3) consisting of the following active compound combinations:
(I-2) + (1.002), (I-2) + (1.018), (I-2) + (1.021), (I-2) + (2.001), (I-2) + (2.002), (I-2) + (2.005), (I-2) + (2.027), (I-2) + (3.016), (I-2) + (3.020), (I-2) + (5.004), (1-2) + (5.013), (I-2) + (5.018).

*Composition /Formulation*

The present invention further relates to a composition, in particular a composition for controlling unwanted microorganisms. The compositions may be applied to the microorganisms and/or in their habitat.

The composition typically comprises at least one active compound combination and at least one agriculturally suitable auxiliary, e.g. carrier(s) and/or surfactant(s).

In the context of the present invention, "control of harmful microorganisms" means a reduction in infestation by harmful microorganisms, compared with the untreated plant measured as fungicidal efficacy, preferably a reduction by 25-50 %, compared with the untreated plant (100%), more preferably a reduction by 40-79 %, compared with the untreated plant (100 %); even more preferably, the infection by harmful microorganisms is entirely suppressed (by 70-100%). The control may be curative, i.e. for treatment of already infected plants, or protective, for protection of plants which have not yet been infected.

An "effective but non-phytotoxic amount" means an amount of the inventive composition which is sufficient to control the fungal disease of the plant in a satisfactory manner or to eradicate the fungal disease completely, and which, at the same time, does not cause any significant symptoms of phytotoxicity. In general, this application rate may vary within a relatively wide range. It depends on several factors, for example on the fungus to be controlled, the plant, the climatic conditions and the ingredients of the inventive compositions.

A carrier is a solid or liquid, natural or synthetic, organic or inorganic substance that is generally inert. The carrier generally improves the application of the compounds, for instance, to plants, plants parts or seeds. Examples of suitable *solid carriers* include, but are not limited to, ammonium salts, natural rock flours, such as kaolins, clays, talc, chalk, quartz, attapulgite, montmorillonite and diatomaceous earth, and synthetic rock flours, such as finely divided silica, alumina and silicates. Examples of typically useful solid carriers for preparing granules include, but are not limited to crushed and fractionated natural rocks such as calcite, marble, pumice, sepiolite and dolomite, synthetic granules of inorganic and organic flours and granules of organic material such as paper, sawdust, coconut shells, maize cobs and tobacco stalks. Examples of suitable *liquid carriers* include, but are not limited to, water, organic solvents and combinations thereof. Examples of suitable *solvents* include polar and nonpolar organic chemical liquids, for example from the classes of aromatic and nonaromatic hydrocarbons (such as cyclohexane, paraffins, alkylbenzenes, xylene, toluene alkylnaphthalenes, chlorinated aromatics or chlorinated aliphatic hydrocarbons such as chlorobenzenes, chloroethylenes or methylene chloride), alcohols and polyols (which may optionally also be substituted, etherified and/or esterified, such as butanol or glycol), ketones (such as acetone, methyl ethyl ketone, methyl isobutyl ketone or cyclohexanone), esters (including fats and oils) and (poly)ethers, unsubstituted and substituted amines, amides (such as dimethylformamide), lactams (such as N-alkylpyrrolidones) and lactones, sulphones and sulphoxides (such as dimethyl sulphoxide). The carrier may also be a liquefied gaseous extender, i.e. liquid which is gaseous at standard temperature and under standard pressure, for example aerosol propellants such as halohydrocarbons, butane, propane, nitrogen and carbon dioxide.

The surfactant can be an ionic (cationic or anionic) or non-ionic surfactant, such as ionic or non-ionic emulsifier(s), foam former(s), dispersant(s), wetting agent(s) and any mixtures thereof. Examples of suitable surfactants include, but are not limited to, salts of polyacrylic acid, salts of lignosulphonic acid, salts of phenolsulphonic acid or naphthalenesulphonic acid, polycondensates of ethylene and/or propylene oxide with fatty alcohols, fatty acids or fatty amines (polyoxyethylene fatty acid esters, polyoxyethylene fatty alcohol ethers, for example alkylaryl polyglycol ethers), substituted phenols (preferably alkylphenols or arylphenols), salts of sulphosuccinic esters, taurine derivatives (preferably alkyl taurates), phosphoric esters of polyethoxylated alcohols or phenols, fatty esters of polyols and derivatives of compounds containing sulphates, sulphonates, phosphates (for example, alkylsulphonates, alkyl sulphates, arylsulphonates) and protein hydrolysates, lignosulphite waste liquors and methylcellulose. A surfactant is typically used when the compoundof the formula (I) and/or the carrier is insoluble in water and the application is made with water. Then, the amount of surfactants typically ranges from 5 to 40 % by weight of the composition.

Further examples of suitable auxiliaries include water repellents, siccatives, binders (adhesive, tackifier, fixing agent, such as carboxymethylcellulose, natural and synthetic polymers in the form of powders, granules or latices, such as gum arabic, polyvinyl alcohol and polyvinyl acetate, natural phospholipids such as cephalins and lecithins and synthetic phospholipids, polyvinylpyrrolidone, polyvinyl acetate, polyvinyl alcohol and tylose), thickeners, stabilizers (e.g. cold stabilizers, preservatives, antioxidants, light stabilizers, or other agents which improve chemical and/or physical stability), dyes or pigments (such as inorganic pigments, e.g. iron oxide, titanium oxide and Prussian Blue; organic dyes, e.g. alizarin, azo and metal phthalocyanine dyes), antifoams (e.g. silicone antifoams and magnesium stearate), preservatives (e.g. dichlorophene and benzyl alcohol hemiformal), secondary thickeners (cellulose derivatives, acrylic acid derivatives, xanthan, modified clays and finely divided silica), stickers, gibberellins and processing auxiliaries, mineral and vegetable oils, perfumes, waxes, nutrients (including trace nutrients, such as salts of iron, manganese, boron, copper, cobalt, molybdenum and zinc), protective colloids, thixotropic substances, penetrants, sequestering agents and complex formers.

The choice of the auxiliaries is related to the intended mode of application of the compound of the formula (I)

and/or on the physical properties. Furthermore, the auxiliaries may be chosen to impart particular properties (technical, physical and/or biological properties) to the compositions or use forms prepared therefrom. The choice of auxiliaries may allow customizing the compositions to specific needs.

The composition of the invention may be in any customary form, such as solutions (e.g aqueous solutions), emulsions, wettable powders, water- and oil-based suspensions, powders, dusts, pastes, soluble powders, soluble granules, granules for broadcasting, suspoemulsion concentrates, natural or synthetic products impregnated with the active compound combinations, fertilizers and also microencapsulations in polymeric substances. The active compound combination according to the invention may be present in a suspended, emulsified or dissolved form.

The composition of the invention may be provided to the end user as ready-for-use formulation, i.e. the compositions can be directly applied to the plants or seeds by a suitable device, such as a spraying or dusting device. Alternatively, the compositions may be provided to the end user in the form of concentrates which have to be diluted, preferably with water, prior to use.

The composition of the invention can be prepared in conventional manners, for example by mixing the active compound combination according to the invention with one or more suitable auxiliaries, such as disclosed herein above.

The compositions according to the invention contain generally from 0.01 to 99% by weight, from 0.05 to 98% by weight, preferably from 0.1 to 95% by weight, more preferably from 0.5 to 90% by weight, most preferably from 10 to 70 % by weight of the active compound combination according to the invention.

*Methods and uses*

The active compound combination and the composition of the invention have potent microbicidal activity. They can be used for controlling unwanted microorganisms, such as unwanted fungi and bacteria. They can be particularly useful in crop protection (they control microorganisms that cause plants diseases) or for protecting materials (e.g. industrial materials, timber, storage goods) as described in more details herein below. More specifically, the active compound combination according to the invention and the composition of the invention can be used to protect seeds, germinating plants, emerged seedlings, plants, plant parts, fruits and the soil in which the plants grow from unwanted microorganisms.

Control or controlling as used herein encompasses curative and protective treatment of unwanted microorganisms. Unwanted microorganisms may be pathogenic bacteria or pathogenic fungi, more specifically phytopathogenic bacteria or phytopathogenic fungi. As detailed herein below, these phytopathogenic microorganims are the causal agents of a broad spectrum of plants diseases.

More specifically, the active compound combination according to the invention and the composition of the invention can be used as fungicides. In particular, they can be useful in crop protection, for example for the control of unwanted fungi, such as Plasmodiophoromycetes, Oomycetes, Chytridiomycetes, Zygomycetes, Ascomycetes, Basidiomycetes and Deuteromycetes.

The active compound combination according to the invention and the composition of the invention can also be used as bactericide. In particular, they can be used in crop protection, for example for the control of unwanted bacteria, such as Pseudomonadaceae, Rhizobiaceae, Enterobacteriaceae, Corynebacteriaceae and Streptomycetaceae.

The present invention also relates to a method for controlling unwanted microorganisms, such as unwanted fungi and bacteria, comprising the step of applying at least one active compound combination according to the invention or at least one composition of the invention to the microorganisms and/or their habitat (to the plants, plant parts, seeds, fruits or to the soil in which the plants grow).

Typically, when the active compound combination and the composition of the invention are used in curative or protective methods for controlling phytopathogenic fungi, an effective and non-phytotoxic amount thereof is applied to the plants, plant parts, fruits, seeds or to the soil in which the plants grow.

Effective and non-phytotoxic amount means an amount that is sufficient to control or destroy the fungi present or liable to appear on the cropland and that does not entail any appreciable symptom of phytotoxicity for said crops. Such an amount can vary within a wide range depending on the fungus to be controlled, the type of crop, the climatic conditions and the respective active compound combination or composition of the invention used. This amount can be determined by systematic field trials that are within the capabilities of a person skilled in the art.

*Plants and plant parts*

The active compound combination and the composition of the invention can be applied to any plants or plant parts.

Plants mean all plants and plant populations, such as desired and undesired wild plants or crop plants (including naturally occurring crop plants). Crop plants may be plants which can be obtained by conventional breeding and optimization methods or by biotechnological and genetic engineering methods or combinations of these methods, including

the genetically modified plants (GMO or transgenic plants) and the plant cultivars which are protectable and non-protectable by plant breeders' rights.

*Genetically modified plants (GMO)*

Genetically modified plants (GMO or transgenic plants) are plants of which a heterologous gene has been stably integrated into the genome. The expression "heterologous gene" essentially means a gene which is provided or assembled outside the plant and when introduced in the nuclear, chloroplastic or mitochondrial genome. This gene gives the transformed plant new or improved agronomic or other properties by expressing a protein or polypeptide of interest or by downregulating or silencing other gene(s) which are present in the plant (using for example, antisense technology, cosuppression technology, RNA interference - RNAi - technology or microRNA - miRNA - technology). A heterologous gene that is located in the genome is also called a transgene. A transgene that is defined by its particular location in the plant genome is called a transformation or transgenic event.

Plant cultivars are understood to mean plants which have new properties ("traits") and have been obtained by conventional breeding, by mutagenesis or by recombinant DNA techniques. They can be cultivars, varieties, bio- or genotypes.

Plant *parts* are understood to mean all *parts* and organs of plants above and below the ground, such as shoots, leaves, needles, stalks, stems, flowers, fruit bodies, fruits, seeds, roots, tubers and rhizomes. The plant parts also include harvested material and vegetative and generative propagation material, for example cuttings, tubers, rhizomes, slips and seeds.

Plants which can be treated in accordance with the methods of the invention include the following: cotton, flax, grapevine, fruit, vegetables, such as *Rosaceae sp.* (for example pome fruits such as apples and pears, but also stone fruits such as apricots, cherries, almonds and peaches, and soft fruits such as strawberries), *Ribesioidae sp., Juglandaceae sp., Betulaceae sp., Anacardiaceae sp., Fagaceae sp., Moraceae sp., Oleaceae sp., Actinidaceae sp., Lauraceae sp., Musaceae sp.* (for example banana trees and plantations), *Rubiaceae sp.* (for example coffee), *Theaceae sp., Sterculiceae sp., Rutaceae sp.* (for example lemons, oranges and grapefruit); *Solanaceae sp.* (for example tomatoes), *Liliaceae sp., Asteraceae sp.* (for example lettuce), *Umbelliferae sp., Cruciferae sp., Chenopodiaceae sp., Cucurbitaceae sp.* (for example cucumber), *Alliaceae sp.* (for example leek, onion), *Papilionaceae sp.* (for example peas); major crop plants, such as *Gramineae sp.* (for example maize, turf, cereals such as wheat, rye, rice, barley, oats, millet and triticale), *Asteraceae sp.* (for example sunflower), *Brassicaceae sp.* (for example white cabbage, red cabbage, broccoli, cauliflower, Brussels sprouts, pak choi, kohlrabi, radishes, and oilseed rape, mustard, horseradish and cress), *Fabacae sp.* (for example bean, peanuts), *Papilionaceae sp,* (for example soya bean), *Solanaceae sp.* (for example potatoes), *Chenopodiaceae sp.* (for example sugar beet, fodder beet, swiss chard, beetroot); useful plants and ornamental plants for gardens and wooded areas; and genetically modified varieties of each of these plants

*Pathogens*

Non-limiting examples of pathogens of fungal diseases which can be treated in accordance with the invention include:

diseases caused by powdery mildew pathogens, for example Blumeria species, for example Blumeria graminis; Podosphaera species, for example Podosphaera leucotricha; Sphaerotheca species, for example Sphaerotheca fuliginea; Uncinula species, for example Uncinula necator;

diseases caused by rust disease pathogens, for example Gymnosporangium species, for example Gymnosporangium sabinae; Hemileia species, for example Hemileia vastatrix; Phakopsora species, for example Phakopsora pachyrhizi or Phakopsora meibomiae; Puccinia species, for example Puccinia recondita, Puccinia graminis oder Puccinia striiformis; Uromyces species, for example Uromyces appendiculatus;

diseases caused by pathogens from the group of the Oomycetes, for example Albugo species, for example Albugo candida; Bremia species, for example Bremia lactucae; Peronospora species, for example Peronospora pisi or P. brassicae; Phytophthora species, for example Phytophthora infestans; Plasmopara species, for example Plasmopara viticola; Pseudoperonospora species, for example Pseudoperonospora humuli or Pseudoperonospora cubensis; Pythium species, for example Pythium ultimum;

leaf blotch diseases and leaf wilt diseases caused, for example, by Alternaria species, for example Alternaria solani; Cercospora species, for example Cercospora beticola; Cladiosporium species, for example Cladiosporium cucumerinum; Cochliobolus species, for example Cochliobolus sativus (conidial form: Drechslera, syn: Helminthosporium)

or Cochliobolus miyabeanus; Colletotrichum species, for example Colletotrichum lindemuthanium; Cycloconium species, for example Cycloconium oleaginum; Diaporthe species, for example Diaporthe citri; Elsinoe species, for example Elsinoe fawcettii; Gloeosporium species, for example Gloeosporium laeticolor; Glomerella species, for example Glomerella cingulata; Guignardia species, for example Guignardia bidwelli; Leptosphaeria species, for example Leptosphaeria maculans; Magnaporthe species, for example Magnaporthe grisea; Microdochium species, for example Microdochium nivale; Mycosphaerella species, for example Mycosphaerella graminicola, Mycosphaerella arachidicola or Mycosphaerella fijiensis; Phaeosphaeria species, for example Phaeosphaeria nodorum; Pyrenophora species, for example Pyrenophora teres or Pyrenophora tritici repentis; Ramularia species, for example Ramularia collo-cygni or Ramularia areola; Rhynchosporium species, for example Rhynchosporium secalis; Septoria species, for example Septoria apii or Septoria lycopersici; Stagonospora species, for example Stagonospora nodorum; Typhula species, for example Typhula incarnata; Venturia species, for example Venturia inaequalis;

root and stem diseases caused, for example, by Corticium species, for example Corticium graminearum; Fusarium species, for example Fusarium oxysporum; Gaeumannomyces species, for example Gaeumannomyces graminis; Plasmodiophora species, for example Plasmodiophora brassicae; Rhizoctonia species, for example Rhizoctonia solani; Sarocladium species, for example Sarocladium oryzae; Sclerotium species, for example Sclerotium oryzae; Tapesia species, for example Tapesia acuformis; Thielaviopsis species, for example Thielaviopsis basicola;

ear and panicle diseases (including corn cobs) caused, for example, by Alternaria species, for example Alternaria spp.; Aspergillus species, for example Aspergillus flavus; Cladosporium species, for example Cladosporium cladosporioides; Claviceps species, for example Claviceps purpurea; Fusarium species, for example Fusarium culmorum; Gibberella species, for example Gibberella zeae; Monographella species, for example Monographella nivalis; Stagnospora species, for example Stagnospora nodorum;

diseases caused by smut fungi, for example Sphacelotheca species, for example Sphacelotheca reiliana; Tilletia species, for example Tilletia caries or Tilletia controversa; Urocystis species, for example Urocystis occulta; Ustilago species, for example Ustilago nuda;

fruit rot caused, for example, by Aspergillus species, for example Aspergillus flavus; Botrytis species, for example Botrytis cinerea; Penicillium species, for example Penicillium expansum or Penicillium purpurogenum; Rhizopus species, for example Rhizopus stolonifer; Sclerotinia species, for example Sclerotinia sclerotiorum; Verticilium species, for example Verticilium alboatrum;

seed- and soil-borne rot and wilt diseases, and also diseases of seedlings, caused, for example, by Alternaria species, for example Alternaria brassicicola; Aphanomyces species, for example Aphanomyces euteiches; Ascochyta species, for example Ascochyta lentis; Aspergillus species, for example Aspergillus flavus; Cladosporium species, for example Cladosporium herbarum; Cochliobolus species, for example Cochliobolus sativus (conidial form: Drechslera, Bipolaris Syn: Helminthosporium); Colletotrichum species, for example Colletotrichum coccodes; Fusarium species, for example Fusarium culmorum; Gibberella species, for example Gibberella zeae; Macrophomina species, for example Macrophomina phaseolina; Microdochium species, for example Microdochium nivale; Monographella species, for example Monographella nivalis; Penicillium species, for example Penicillium expansum; Phoma species, for example Phoma lingam; Phomopsis species, for example Phomopsis sojae; Phytophthora species, for example Phytophthora cactorum; Pyrenophora species, for example Pyrenophora graminea; Pyricularia species, for example Pyricularia oryzae; Pythium species, for example Pythium ultimum; Rhizoctonia species, for example Rhizoctonia solani; Rhizopus species, for example Rhizopus oryzae; Sclerotium species, for example Sclerotium rolfsii; Septoria species, for example Septoria nodorum; Typhula species, for example Typhula incarnata; Verticillium species, for example Verticillium dahliae;

cancers, galls and witches' broom caused, for example, by Nectria species, for example Nectria galligena;

wilt diseases caused, for example, by Monilinia species, for example Monilinia laxa;

deformations of leaves, flowers and fruits caused, for example, by Exobasidium species, for example Exobasidium vexans; Taphrina species, for example Taphrina deformans;

degenerative diseases in woody plants, caused, for example, by Esca species, for example Phaeomoniella chlamydospora, Phaeoacremonium aleophilum or Fomitiporia mediterranea; Ganoderma species, for example Ganoderma boninense;

diseases of flowers and seeds caused, for example, by Botrytis species, for example Botrytis cinerea;

diseases of plant tubers caused, for example, by Rhizoctonia species, for example Rhizoctonia solani; Helminthosporium species, for example Helminthosporium solani;

diseases caused by bacterial pathogens, for example Xanthomonas species, for example Xanthomonas campestris pv. oryzae; Pseudomonas species, for example Pseudomonas syringae pv. lachrymans; Erwinia species, for example Erwinia amylovora.

diseases of soya beans:

Fungal diseases on leaves, stems, pods and seeds caused, for example, by Alternaria leaf spot (Alternaria spec. atrans tenuissima), Anthracnose (Colletotrichum gloeosporoides dematium var. truncatum), brown spot (Septoria glycines), cercospora leaf spot and blight (Cercospora kikuchii), choanephora leaf blight (Choanephora infundibulifera trispora (Syn.)), dactuliophora leaf spot (Dactuliophora glycines), downy mildew (Peronospora manshurica), drechslera blight (Drechslera glycini), frogeye leaf spot (Cercospora sojina), leptosphaerulina leaf spot (Leptosphaerulina trifolii), phyllostica leaf spot (Phyllosticta sojaecola), pod and stem blight (Phomopsis sojae), powdery mildew (Microsphaera diffusa), pyrenochaeta leaf spot (Pyrenochaeta glycines), rhizoctonia aerial, foliage, and web blight (Rhizoctonia solani), rust (Phakopsora pachyrhizi, Phakopsora meibomiae), scab (Sphaceloma glycines), stemphylium leaf blight (Stemphylium botryosum), target spot (Corynespora cassiicola).

Fungal diseases on roots and the stem base caused, for example, by black root rot (Calonectria crotalariae), charcoal rot (Macrophomina phaseolina), fusarium blight or wilt, root rot, and pod and collar rot (Fusarium oxysporum, Fusarium orthoceras, Fusarium semitectum, Fusarium equiseti), mycoleptodiscus root rot (Mycoleptodiscus terrestris), neocosmospora (Neocosmospora vasinfecta), pod and stem blight (Diaporthe phaseolorum), stem canker (Diaporthe phaseolorum var. caulivora), phytophthora rot (Phytophthora megasperma), brown stem rot (Phialophora gregata), pythium rot (Pythium aphanidermatum, Pythium irregulare, Pythium debaryanum, Pythium myriotylum, Pythium ultimum), rhizoctonia root rot, stem decay, and damping-off (Rhizoctonia solani), sclerotinia stem decay (Sclerotinia sclerotiorum), sclerotinia southern blight (Sclerotinia rolfsii), thielaviopsis root rot (Thielaviopsis basicola).

The following diseases of soya beans can be controlled with preference:
Fungal diseases on leaves, stems, pods and seeds caused, for example, by *Alternaria* leaf spot (*Altemaria spec. atrans tenuissima*), Anthracnose (*Colletotrichum gloeosporoides dematium var. truncatum*), brown spot (*Septoria glycines*), cercospora leaf spot and blight (*Cercospora kikitchii*), choanephora leaf blight (*Choamephora infundibulifera trispora* (Syn.)), dactuliophora leaf spot (*Dactuliophora glycines*), downy mildew (*Peronospora manshurica*), drechslera blight (*Drechslera glycini*), frogeye leaf spot (*Cercospora sojina*), leptosphaerulina leaf spot (*Leplosphaendina trifolii*), phyllostica leaf spot (*Phyllosticta sojaecola*), pod and stem blight (*Phomopsis sojae*), powdery mildew (*Microsphaera diffusa*), pyrenochaeta leaf spot (*Pyrenochaeta glycines*), rhizoctonia aerial, foliage, and web blight (*Rhizoctonia solani*), rust (*Phakopsora pachyrhizi, Phakopsora meibomiae*), scab (*Sphaceloma glycines*), stemphylium leaf blight (*Stemphylium botryosum*), target spot (*Corynespora cassiicola*).

Fungal diseases on roots and the stem base caused, for example, by black root rot (*Caloneclria crotalaniae*), charcoal rot (*Macrophomina phaseolina*), fusarium blight or wilt, root rot, and pod and collar rot (*Fusarium oxysporum, Fusarium orthoceras, Fusarium semitectum, Fusarium equiseti*), mycoleptodiscus root rot (*Mycoieptodiscus terrestris*), neocosmospora (*Neocosmospora vasinfecta*), pod and stem blight (*Diaporthe phaseolorum*), stem canker (*Diaporthe phaseolorum var. caulivora*), phytophthora rot (*Phytophthora megasperma*), brown stem rot (*Phialophora gregata*), pythium rot (*Pythium aphanidermatum, Pythium irregulare, Pythium debatyanum, Pythium myriotylum, Pythium ultimum*), rhizoctonia root rot, stem decay, and damping-off (*Rhizoctonia solani*), sclerotinia stem decay (*Sclerotinia sclerotiorum*), sclerotinia southern blight (*Sclerotinia rolfsii*), thielaviopsis root rot (*Thielaviopsis basicola*).

The inventive fungicidal compositions can be used for curative or protective/preventive control of phytopathogenic fungi. The invention therefore also relates to curative and protective methods for controlling phytopathogenic fungi by the use of the inventive active compound combinations or compositions, which are applied to the seed, the plant or plant parts, the fruit or the soil in which the plants grow.

The fact that the active compound combinations are well tolerated by plants at the concentrations required for controlling plant diseases allows the treatment of above-ground parts of plants, of propagation stock and seeds, and of the soil.

According to the invention all plants and plant parts can be treated. By plants is meant all plants and plant populations such as desirable and undesirable wild plants, cultivars and plant varieties (whether or not protectable by plant variety or plant breeder's rights). Cultivars and plant varieties can be plants obtained by conventional propagation and breeding methods which can be assisted or supplemented by one or more biotechnological methods such as by use of double haploids, protoplast fusion, random and directed mutagenesis, molecular or genetic markers or by bioengineering and genetic engineering methods. By plant parts is meant all above ground and below ground parts and organs of plants such as shoot, leaf, blossom and root, whereby for example leaves, needles, stems, branches, blossoms, fruiting bodies, fruits and seed as well as roots, corms and rhizomes are listed. Crops and vegetative and generative propagating material, for example cuttings, corms, rhizomes, runners and seeds also belong to plant parts.

The inventive active compound combinations, when they are well tolerated by plants, have favourable homeotherm toxicity and are well tolerated by the environment, are suitable for protecting plants and plant organs, for enhancing harvest yields, for improving the quality of the harvested material. They can preferably be used as crop protection compositions. They are active against normally sensitive and resistant species and against all or some stages of development.

Plants which can be treated in accordance with the invention include the following main crop plants: maize, soya bean, alfalfa, cotton, sunflower, *Brassica* oil seeds such as *Brassica napus* (e.g. canola, rapeseed), *Brassica rapa, B. juncea* (e.g. (field) mustard) and *Brassica carinata, Arecaceae sp.* (e.g. oilpalm, coconut), rice, wheat, sugar beet, sugar cane, oats, rye, barley, millet and sorghum, triticale, flax, nuts, grapes and vine and various fruit and vegetables from various botanic taxa, e.g. *Rosaceae sp.* (e.g. pome fruits such as apples and pears, but also stone fruits such as apricots, cherries, almonds, plums and peaches, and berry fruits such as strawberries, raspberries, red and black currant and gooseberry), *Ribesioidae sp., Juglandaceae sp., Betulaceae sp., Anaeardiaceae sp., Fagaceae sp., Moraceae sp., Oleaceae sp.* (e.g. olive tree), *Actinidaceae sp., Lauraceae sp.* (e.g. avocado, cinnamon, camphor), *Musaceae sp.* (e.g. banana trees and plantations), *Rubiaceae sp.* (e.g. coffee), *Theaceae sp.* (e.g. tea), *Sterculiceae sp., Rutaceae sp.* (e.g. lemons, oranges, mandarins and grapefruit); *Solanaceae sp.* (e.g. tomatoes, potatoes, peppers, capsicum, aubergines, tobacco), *Liliaceae sp., Compositae sp.* (e.g. lettuce, artichokes and chicory - including root chicory, endive or common chicory), *Umbelliferae sp.* (e.g. carrots, parsley, celery and celeriac), *Cucurbitaceae sp.* (e.g. cucumbers - including gherkins, pumpkins, watermelons, calabashes and melons), *Alliaceae sp.* (e.g. leeks and onions), *Cruciferae sp.* (e.g. white cabbage, red cabbage, broccoli, cauliflower, Brussels sprouts, pak choi, kohlrabi, radishes, horseradish, cress and chinese cabbage), *Leguminosae sp.* (e.g. peanuts, peas, lentils and beans - e.g. common beans and broad beans), *Chenopodiaceae sp.* (e.g. Swiss chard, fodder beet, spinach, beetroot), *Linaceae sp.* (e.g. hemp), *Cannabeacea sp.* (e.g. cannabis), *Malvaceae sp.* (e.g. okra, cocoa), *Papaveraceae* (e.g. poppy), *Asparagaceae* (e.g. asparagus); useful plants and ornamental plants in the garden and woods including turf, lawn, grass and *Stevia rebaudiana*; and in each case genetically modified types of these plants.

In particular, the active compound combinations and compositions according to the invention are suitable for controlling the following plant diseases:

*Albugo* spp. (white rust) on ornamental plants, vegetable crops (e.g. *A. candida*) and sunflowers (e.g. *A. tragopogonis*); *Alternaria* spp. (black spot disease, black blotch) on vegetables, oilseed rape (e.g. *A. brassicola* or *A. brassicae*), sugar beet (e.g. *A. tenuis*), fruit, rice, soybeans and also on potatoes (e.g. *A. solani* or *A. alternata*) and tomatoes (e.g. *A. solani* or *A. alternata*) and *Alternaria* spp. (black head) on wheat; *Aphanomyces* spp. on sugar beet and vegetables; *Ascochyta* spp. on cereals and vegetables, e.g. *A. tritici* (Ascochyta leaf blight) on wheat and *A. hordei* on barley; *Bipolaris* and *Drechslera* spp. (teleomorph: *Cochliobolus* spp.), e.g. leaf spot diseases (*D. maydis* and *B. zeicola*) on corn, e.g. glume blotch (*B. sorokiniana*) on cereals and e.g. *B. oryzae* on rice and on lawn; *Blumeria* (old name: *Erysiphe*) *graminis* (powdery mildew) on cereals (e.g. wheat or barley); *Botryosphaeria* spp. ('Slack Dead Arm Disease') on grapevines (e.g. *B. obtusa*); *Botrytis cinerea* (teleomorph: *Botryotinia fuckeliana:* gray mold, gray rot) on soft fruit and pomaceous fruit (inter alia strawberries), vegetables (inter alia lettuce, carrots, celeriac and cabbage), oilseed rape, flowers, grapevines, forest crops and wheat (ear mold); *Bremia lactucae* (downy mildew) on lettuce; *Ceratocystis* (syn. *Ophiostoma*) spp. (blue stain fungus) on deciduous trees and coniferous trees, e.g. *C. ulmi* (Dutch elm disease) on elms; *Cercospora* spp. (Cereospora leat spot) on corn (e.g. *C. zeae-maydis*), rice, sugar beet (e.g. *C. beticola*), sugar cane, vegetables, coffee, soybeans (e.g. *C. sojina* or *C. kikuchil*) and rice; *Cladosporium* spp. on tomato (e.g. *C. fulvum:* tomato leaf mold) and cereals, e.g. *C. herbarum* (ear rot) on wheat; *Claviceps purpurea* (ergot) on cereals; *Cochliobolus* (anamorph: *Helminthosporium* or *Bipolaris*) spp. (leaf spot) on corn (e.g. *C. carhonum*), cereals (e.g. *C. sativus,* anamorph: *B. sorokiniana:* glume blotch) and rice (tor example *C. miyabeanus,* anamorph: *H. oryzae*); *Colletotrichum*(teleomorph: *Glomerella*) spp. (anthracnosis) on cotton (e.g. *C. gossypii*), corn (e.g. *C. graminicola:* stem rot and anthracnosis), soft fruit, potatoes (e.g. *C. coccodes:* wilt disease), beans (e.g. *C. lindemuthianum*) and soybeans (e.g. *C. truncatum*); *Corticium* spp., e.g. *C. sasakii* (sheath blight) on rice; *Corynespora cassiicola* (leaf spot) on soybeans and ornamental plants; *Cycloconium* spp., e.g. *C. oleaginum* on olives; *Cylindrocarpon* spp. (e.g. fruit tree cancer or black foot disease of grapevine, teleomorph: *Nectria* or *Neonectria* spp.) on fruit trees, grapevines (e.g. *C. liriodendn;* teleomorph: *Neonectria liriodendri,* black foot disease) and many ornamental trees; *Dematophora* (teleomorph: *Rosellinia*) *necatrix* (root/stem rot) on soybeans; *Diaporthe* spp. e.g. *D. phaseolorum* (stem disease) on soybeans; *Drechslera* (syn. *Helminthosporium,* teleomorph: *Pyrenophora*) spp. on corn, cereals, such as barley (e.g. *D. teres,* net blotch) and on wheat (e.g. *D. tritici-repentis:* DTR leaf spot), rice and lawn; Esca disease (dieback of grapevine, apoplexia) on grapevines, caused by *Formitiporia* (syn. *Phellinus*) *punctata, F mediterranea. Phaeomoniella chlamydospora* (old name *Phaeoacremonium chlamydosporum*), *Phaeoacremonium aleophilum* and/or *Botryosphaeria obtusa; Elsinoe* spp. on pome fruit (*E. pyri*)

and soft fruit (*E. veneta:* anthracnosis) and also grapevines (*E. ampelina:* anthracnosis); *Entyloma oryzae* (leaf smut) on rice; *Epicoccum* spp. (black head) on wheat; *Erysiphe* spp. (powdery mildew) on sugar beet (*E. betae*), vegetables (e.g. *E. pisi*), such as cucumber species (e.g. *E. cichoracearum*) and cabbage species, such as oilseed rape (e.g. *E. cruciferarum*); *Eutypa fata* (Eutypa cancer or dieback, anamorph: *Cytosporina lata,* syn. *Libertella blepharis*) on fruit trees, grapevines and many ornamental trees; *Exserohilum* (syn. *Helminthosporium*) spp. on corn (e.g. *E. turcicum*); *Fusarium* (teleomorph: *Gibberella*) spp. (wilt disease, root and stem rot) on various plants, such as e.g. *F. graminearum* or *F. culmorum* (root rot and silver-top) on cereals (e.g. wheat or barley), *F. oxysporum* on tomatoes, *F. solani* on soybeans and *F. verticillioides* on corn; *Gaeumannomyces graminis* (takeall) on cereals (e.g. wheat or barley) and corn; *Gibberella* spp. on cereals (e.g. *G. zeae*) and rice (e.g. *G. fujikuroi.* bakanae disease); *Glomerella cingulata* on grapevines, pomaceous fruit and other plants and *G. gossypii* on cotton; *grainstaining complex* on rice; *Guignardia bidwellii* (*black rot*) on grapevines; *Gymnosporangium* spp. on Rosaceae and juniper, e.g. *G. sabinae* (pear rust) on pears; *Helminthosporium* spp. (syn. *Drechslera,* teleomorph: *Cochliobolus*) on corn, cereals and rice; *Hemileia* spp., e.g. *H. vastatrix* (coffee leaf rust) on coffee; *Isariopsis clavispora* (syn. *Cladosporium vitis*) on grapevines; *Macrophomina phaseolina* (syn. *phaseoli*) (root/stem rot) on soybeans and cotton; *Microdochium* (syn. *Fusarium*) *nivale* (pink snow mold) on cereals (e.g. wheat or barley); *Microsphaera diffusa* (powdery mildew) on soybeans; *Monilinia* spp., e.g. *M. laxa. M. fructicola* and *M. fructigena* (blossom and twig blight) on stone fruit and other Rosaceae; *Mycosphaerella* spp. on cereals, bananas, soft fruit and peanuts, such as e.g. *M. graminicola* (anamorph: *Septoria tritici,* Septoria leaf blotch) on wheat or *M. fijiensis* (Sigatoka disease) on bananas; *Peronospora* spp. (downy mildew) on cabbage (e.g. *P. brassicae),* oilseed rape (e.g. *P. parasitica*), bulbous plants (e.g. *P. destructor*), tobacco (*P. tabacina*) and soybeans (e.g. *P. manshurica*); *Phakopsora pachyrhizi* and *P. meibomiae* (*soybean rust*) on soybeans; *Phialophora* spp. e.g. on grapevines (e.g. *P. tracheiphila* and *P. tetraspora*) and soybeans (e.g. *P. gregata:* stem disease); *Phoma lingam* (root and stem rot) on oilseed rape and cabbage and *P. betae* (leaf spot) on sugar beet; *Phomopsis* spp. on sunflowers, grapevines (e.g. *P. viticola:* dead-arm disease) and soybeans (e.g. stem canker/stem blight: *P. phaseoli,* teleomorph: *Diaporthe phaseolorum*); *Physoderma maydis* (brown spot) on corn; *Phytophthora* spp. (wilt disease, root, leaf, stem and fruit rot) on various plants, such as on bell peppers and cucumber species (e.g. *P. capsici*), soybeans (e.g. *P. megasperma,* syn. *P. sojae*), potatoes and tomatoes (e.g. *P. infestans.* late blight and brown rot) and deciduous trees (e.g. *P. ramorum* sudden oak death); *Plasmodiophora brassicae* (club-root) on cabbage, oilseed rape, radish and other plants; *Plasmopara* spp., e.g. *P. viticola* (peronospora of grapevines, downy mildew) on grapevines and *P. halstedii* on sunflowers; *Podosphaera* spp. (powdery mildew) on Rosaceae, hops, pomaceaus fruit and soft fruit, e.g. *P. leucotricha* on apple; *Polymyxa* spp., e.g. on cereals, such as barley and wheat (*P. graminis*) and sugar beet (*P. betae*) and the viral diseases transmitted thereby; *Pseudocercosporella herpotrichoides* (eyespot/stem break, teleomorph: *Tapesia yallundae*) on cereals, e.g. wheat or barley; *Pseudoperonospora* (downy mildew) on various plants, e.g. *P. cubensis* on cucumber species or *P. humili* on hops; *Pseudopezicula tracheiphila* (angular leaf scorch, anamorph *Phialophora*) on grapevines; *Puccinia* spp. (rust disease) on various plants, e.g. *P. triticina* (brown rust of wheat), *P. striiformis* (yellow rust). *P. hordei* (dwarf leaf rust), *P. graminis* (black rust) or *P. recondita* (brown rust of rye) on cereals, such as e.g. wheat, barley or rye. *P. kuehnii* on sugar cane and, e.g., on asparagus (e.g. *P. asparagi*); *Pyrenophora* (anamorph: *Drechslera*) *tritici-repentis* (speckled leaf blotch) on wheat or *P. teres* (net blotch) on barley; *Pyricularia* spp., e.g. *P. oryzae* (teleomorph: *Magnaporthe grisea.* rice blast) on rice and *P. grisea* on lawn and cereals; *Pythium* spp. (*damping-off disease*) on lawn, rice, corn, wheat, cotton, oilseed rape, sunflowers, sugar beet, vegetables and other plants (e.g. *P. ultimum* or *P. aphanidermatum*); *Ramularia* spp., e.g. *R. collo-cygni*(*Ramularia* leaf and lawn spot/physiological leaf spot) on barley and *R. belicola* on sugar beet; *Rhizoctonia* spp. on cotton, rice, potatoes, lawn, corn, oilseed rape, potatoes, sugar beet, vegetables and on various other plants, for example *R. solani* (root and stern rot) on soybeans, *R. solani* (sheath blight) on rice or *R, cerealis* (sharp eyespot) on wheat or barley; *Rhizopus stolonifer* (soft rot) on strawberries, carrots, cabbage, grapevines and tomato; *Rhynchosporium secalis* (leaf spot) on barley, rye and triticale; *Sarocladium oryzae* and *S. attenuation* (sheath rot) on rice; *Sclerotinia* spp. (stem or white rot) on vegetable and field crops, such as oilseed rape, sunflowers (e.g. *Sclerotinia sclerotiorum*) and soybeans (e.g. *S. rolfsii*), *Septoria* spp. on various plants, e.g. *S. glycines* (leaf spot) on soybeans, *S. tritici* (*Septoria* leaf blotch) on wheat and *S.* (syn. *Stagonospora*) *nodorum* (leaf blotch and glume blotch) on cereals; *Uncinula* (syn. *Erysiphe) necator* (*powdery* mildew, anamorph: *Oidium inckeri*) on grapevines; *Setospaeria* spp. (leaf spot) on corn (e.g. *S. turcicum,* syn. *Helminthosporium turcicum*) and lawn; *Sphacelotheca* spp, (head smut) on corn, (e.g. *S. reiliana:* kernel smut), millet and sugar cane; *Sphaerotheca fuliginea* (powdery mildew) on cucumber species; *Spongospora subterranea* (powdery scab) on potatoes and the viral diseases transmitted thereby; *Stagonospora* spp. on cereals, e.g. *S. nodorum* (leaf blotch and glume blotch, teleomorph: *Leptosphaeria* [syn. *Phaeosphaeria*] *nodorum*) on wheat; *Synchytrium endobioticum* on potatoes (potato wart disease); *Taphrina* spp., e.g. *T. deformans* (curly-leaf disease) on peach and *T. pruni* (plum-pocket disease) on pi urns; *Thielaviopsis* spp. (black root rot) on tobacco, pome fruit, vegetable crops, soybeans and cotton, e.g. *T. basicola* (syn. *Chalara elegans); Tilletia* spp. (*bunt or stinking smut*) on cereals, such as e.g. *T. tritici* (syn. *T. caries,* wheat bunt) and *T. controversa* (dwarf bunt) on wheat; *Typhula incarnata* (gray snow mold) on barley or wheat; *Urocystis* spp., e.g. *U. occulta* (flag smut) on rye; *Uromyces* spp. (rust) on vegetable plants, such as beans (e.g. *U, appendiculatus,* syn. *U. phaseoll*) and sugar beet (e.g. *U. betae*)*; Ustilago* spp. (loose smut) on cereals

(e.g. *U. nuda* and *U. avaenae*), corn (e.g. *U. maydis:* corn smut) and sugar cane; *Venturia* spp. (scab) on apples (e.g. *V. inaequalis*) and pears and *Verticillium* spp. (leaf and shoot wilt) on various plants, such as fruit trees and ornamental trees, grapevines, soft fruit, vegetable and field crops, such as e.g. *V. dahliae* on strawberries, oilseed rape, potatoes and tomatoes.

Most preference is given to the following soybean diseases:

*Cercospora kikuchii, Cercospora sojina;*

*Colletotrichum gloeosporoides dematium var. truncatum;*

*Corynespora casiicola;*

*Diaporthe phaseolorum;*

*Microsphaera diffusa;*

*Peronospora manshurica;*

*Phakopsora* species, for example *Phakopsora pachyrhizi* and *Phakopsora meibomiae* (*soybean rust*);

*Phytophthora megasperma;*

*Phialophora gregata;*

*Rhizoctonia solani*;

*Sclerotinia sclerotiorum*;

*Septoria* spp. e.g. *Septoria glycines,*

*Thielaviopsis basicola.*

The present invention is also directed to the use of the combinations according to the invention for the treatment of soybean diseases.

*Mycotoxins*

In addition, the active compound combination and the composition of the invention can reduce the mycotoxin content in the harvested material and the foods and feeds prepared therefrom. Mycotoxins include particularly, but not exclusively, the following: deoxynivalenol (DON), nivalenol, 15-Ac-DON, 3-Ac-DON, T2- and HT2-toxin, fumonisins, zearalenon, moniliformin, fusarin, diaceotoxyscirpenol (DAS), beauvericin, enniatin, fusaroproliferin, fusarenol, ochratoxins, patulin, ergot alkaloids and aflatoxins which can be produced, for example, by the following fungi: *Fusarium* spec., such as *F. acuminatum, F. asiaticum, F. avenaceum, F. crookwellense, F. culmorum, F. graminearum* (*Gibberella zeae), F. equiseti, F. fujikoroi, F. musarum, F. oxysporum, F. proliferatum, F. poae, F. pseudograminearum, F. sambucinum, F. scirpi, F. semitectum, F. solani, F. sporotrichoides, F. langsethiae, F. subglutinans, F. tricinctum, F. verticillioides* etc., and also by *Aspergillus* spec., such as *A. flavus, A. parasiticus, A. nomius, A. ochraceus, A. clavatus, A. terreus, A. versicolor, Penicillium* spec., such as *P. verrucosum, P. viridicatum, P. citrinum, P. expansum, P. claviforme, P. roqueforti, Claviceps* spec., such as *C. purpurea, C.fusiformis, C. paspali, C. africana, Stachybotrys* spec. and others.

*Material Protection*

The active compound combination and the composition of the invention can also be used in the protection of materials, especially for the protection of industrial materials against attack and destruction by phytopathogenic fungi.

In addition, the active compound combination and the composition of the invention can be used as antifouling compositions, alone or in combinations with other active ingredients.

Industrial materials in the present context are understood to mean inanimate materials which have been prepared for use in industry. For example, industrial materials which are to be protected from microbial alteration or destruction may be adhesives, glues, paper, wallpaper and board/cardboard, textiles, carpets, leather, wood, fibers and tissues,

paints and plastic articles, cooling lubricants and other materials which can be infected with or destroyed by microorganisms. Parts of production plants and buildings, for example cooling-water circuits, cooling and heating systems and ventilation and air-conditioning units, which may be impaired by the proliferation of microorganisms may also be mentioned within the scope of the materials to be protected. Industrial materials within the scope of the present invention preferably include adhesives, sizes, paper and card, leather, wood, paints, cooling lubricants and heat transfer fluids, more preferably wood.

The active compound combination and the composition of the invention may prevent adverse effects, such as rotting, decay, discoloration, decoloration or formation of mould.

In the case of treatment of wood the active compound combination and the composition of the invention may also be used against fungal diseases liable to grow on or inside timber.

Timber means all types of species of wood, and all types of working of this wood intended for construction, for example solid wood, high-density wood, laminated wood, and plywood. In addition, the active compound combination and the composition of the invention can be used to protect objects which come into contact with saltwater or brackish water, especially hulls, screens, nets, buildings, moorings and signalling systems, from fouling.

The active compound combination and the composition of the invention can also be employed for protecting storage goods. Storage goods are understood to mean natural substances of vegetable or animal origin or processed products thereof which are of natural origin, and for which long-term protection is desired. Storage goods of vegetable origin, for example plants or plant parts, such as stems, leaves, tubers, seeds, fruits, grains, can be protected freshly harvested or after processing by (pre)drying, moistening, comminuting, grinding, pressing or roasting. Storage goods also include timber, both unprocessed, such as construction timber, electricity poles and barriers, or in the form of finished products, such as furniture. Storage goods of animal origin are, for example, hides, leather, furs and hairs. The active compound combination and the composition of the invention may prevent adverse effects, such as rotting, decay, discoloration, decoloration or formation of mould.

Microorganisms capable of degrading or altering industrial materials include, for example, bacteria, fungi, yeasts, algae and slime organisms. The active compound combination and the composition of the invention preferably act against fungi, especially moulds, wood-discoloring and wood-destroying fungi (*Ascomycetes, Basidiomycetes, Deuferomycetes* and *Zygomycetes*), and against slime organisms and algae. Examples include microorganisms of the following genera: *Alternaria,* such as *Alternaria tenuis*; *Aspergillus,* such as *Aspergillus niger; Chaetomium,* such as *Chaetomium globosum*; *Coniophora,* such as *Coniophorapuetama; Lentinus,* such as *Lentinus tigrinus*; *Penicillium,* such as *Penicillium glaucum; Polyporus,* such as *Polyporus versicolor*; *Aureobasidium,* such as *Aureobasidium pullulans*; *Sclerophoma,* such as *Sclerophoma pityophila*; *Trichoderma,* such as *Trichoderma viride*; *Ophiostoma spp., Ceratocystis spp.*, *Humicola spp.*, *Petriella spp., Trichurus spp.*, *Coriolus spp., Gloeophyllum spp., Pleurotus spp., Poria spp., Serpula spp.* and *Tyromyces spp.*, *Cladosporium spp., Paecilomyces* spp. *Mucor spp., Escherichia,* such as *Escherichia coli*; *Pseudomonas,* such as *Pseudomonas aeruginosa*; *Staphylococcus,* such as *Staphylococcus aureus, Candida* spp. and *Saccharomyces spp.,* such as *Saccharomyces cerevisae.*

*Plant Growth Regulation*

The active compound combination and the composition of the invention can, at particular concentrations or application rates, also be used as herbicides, safeners, growth regulators or agents to improve plant properties, or as microbicides, for example as bactericides, viricides (including compositions against viroids) or as compositions against MLO (Mycoplasma-like organisms) and RLO (Rickettsia-like organisms).

The active compound combination and the composition of the invention may intervene in physiological processes of plants and can therefore also be used as plant growth regulators. Plant growth regulators may exert various effects on plants. The effect of the substances depends essentially on the time of application in relation to the developmental stage of the plant, and also on the amounts of active ingredient applied to the plants or their environment and on the type of application. In each case, growth regulators should have a particular desired effect on the crop plants.

Growth regulating effects, comprise earlier germination, better emergence, more developed root system and/or improved root growth, increased ability of tillering, more productive tillers, earlier flowering, increased plant height and/or biomass, shorting of stems, improvements in shoot growth, number of kernels/ear, number of ears/$m^2$, number of stolons and/or number of flowers, enhanced harvest index, bigger leaves, less dead basal leaves, improved phyllotaxy, earlier maturation / earlier fruit finish, homogenous riping, increased duration of grain filling, better fruit finish, bigger fruit/vegetable size, sprouting resistance and reduced lodging.

Increased or improved yield is referring to total biomass per hectare, yield per hectare, kernel/fruit weight, seed size and/or hectolitre weight as well as to improved product quality, comprising:

improved processability relating to size distribution (kernel, fruit, etc.), homogenous riping, grain moisture, better milling, better vinification, better brewing, increased juice yield, harvestability, digestibility, sedimentation value,

falling number, pod stability, storage stability, improved fiber length/strength/uniformity, increase of milk and/or meet quality of silage fed animals, adaption to cooking and frying;

improved marketability relating to improved fruit/grain quality, size distribution (kernel, fruit, etc.), increased storage / shelf-life, firmness / softness, taste (aroma, texture, etc.), grade (size, shape, number of berries, etc.), number of berries/fruits per bunch, crispness, freshness, coverage with wax, frequency of physiological disorders, colour, etc.;

increased desired ingredients such as e.g. protein content, fatty acids, oil content, oil quality, aminoacid composition, sugar content, acid content (pH), sugar/acid ratio (Brix), polyphenols, starch content, nutritional quality, gluten content/index, energy content, taste, etc.;

decreased undesired ingredients such as e.g. less mycotoxines, less aflatoxines, geosmin level, phenolic aromas, lacchase, polyphenol oxidases and peroxidases, nitrate content etc.

Plant growth-regulating compounds can be used, for example, to slow down the vegetative growth of the plants. Such growth depression is of economic interest, for example, in the case of grasses, since it is thus possible to reduce the frequency of grass cutting in ornamental gardens, parks and sport facilities, on roadsides, at airports or in fruit crops. Also of significance is the inhibition of the growth of herbaceous and woody plants on roadsides and in the vicinity of pipelines or overhead cables, or quite generally in areas where vigorous plant growth is unwanted.

Also important is the use of growth regulators for inhibition of the longitudinal growth of cereal. This reduces or completely eliminates the risk of lodging of the plants prior to harvest. In addition, growth regulators in the case of cereals can strengthen the culm, which also counteracts lodging. The employment of growth regulators for shortening and strengthening culms allows the deployment of higher fertilizer volumes to increase the yield, without any risk of lodging of the cereal crop.

In many crop plants, vegetative growth depression allows denser planting, and it is thus possible to achieve higher yields based on the soil surface. Another advantage of the smaller plants obtained in this way is that the crop is easier to cultivate and harvest.

Reduction of the vegetative plant growth may also lead to increased or improved yields because the nutrients and assimilates are of more benefit to flower and fruit formation than to the vegetative parts of the plants.

Alternatively, growth regulators can also be used to promote vegetative growth. This is of great benefit when harvesting the vegetative plant parts. However, promoting vegetative growth may also promote generative growth in that more assimilates are formed, resulting in more or larger fruits.

Furthermore, beneficial effects on growth or yield can be achieved through improved nutrient use efficiency, especially nitrogen (N)-use efficiency, phosphours (P)-use efficiency, water use efficiency, improved transpiration, respiration and/or $CO_2$ assimilation rate, better nodulation, improved Ca-metabolism etc.

Likewise, growth regulators can be used to alter the composition of the plants, which in turn may result in an improvement in quality of the harvested products. Under the influence of growth regulators, parthenocarpic fruits may be formed. In addition, it is possible to influence the sex of the flowers. It is also possible to produce sterile pollen, which is of great importance in the breeding and production of hybrid seed.

Use of growth regulators can control the branching of the plants. On the one hand, by breaking apical dominance, it is possible to promote the development of side shoots, which may be highly desirable particularly in the cultivation of ornamental plants, also in combination with an inhibition of growth. On the other hand, however, it is also possible to inhibit the growth of the side shoots. This effect is of particular interest, for example, in the cultivation of tobacco or in the cultivation of tomatoes.

Under the influence of growth regulators, the amount of leaves on the plants can be controlled such that defoliation of the plants is achieved at a desired time. Such defoliation plays a major role in the mechanical harvesting of cotton, but is also of interest for facilitating harvesting in other crops, for example in viticulture. Defoliation of the plants can also be undertaken to lower the transpiration of the plants before they are transplanted.

Furthermore, growth regulators can modulate plant senescence, which may result in prolonged green leaf area duration, a longer grain filling phase, improved yield quality, etc.

Growth regulators can likewise be used to regulate fruit dehiscence. On the one hand, it is possible to prevent premature fruit dehiscence. On the other hand, it is also possible to promote fruit dehiscence or even flower abortion to achieve a desired mass ("thinning"). In addition it is possible to use growth regulators at the time of harvest to reduce the forces required to detach the fruits, in order to allow mechanical harvesting or to facilitate manual harvesting.

Growth regulators can also be used to achieve faster or else delayed ripening of the harvested material before or after harvest. This is particularly advantageous as it allows optimal adjustment to the requirements of the market. Moreover, growth regulators in some cases can improve the fruit colour. In addition, growth regulators can also be used to synchronize maturation within a certain period of time. This establishes the prerequisites for complete mechanical or

manual harvesting in a single operation, for example in the case of tobacco, tomatoes or coffee.

By using growth regulators, it is additionally possible to influence the resting of seed or buds of the plants, such that plants such as pineapple or ornamental plants in nurseries, for example, germinate, sprout or flower at a time when they are normally not inclined to do so. In areas where there is a risk of frost, it may be desirable to delay budding or germination of seeds with the aid of growth regulators, in order to avoid damage resulting from late frosts.

Finally, growth regulators can induce resistance of the plants to frost, drought or high salinity of the soil. This allows the cultivation of plants in regions which are normally unsuitable for this purpose.

*Resistance Induction / Plant Health and other effects*

The active compound combination and the composition of the invention also exhibit a potent strengthening effect in plants. Accordingly, they can be used for mobilizing the defences of the plant against attack by undesirable microorganisms.

Plant-strengthening (resistance-inducing) substances in the present context are substances capable of stimulating the defence system of plants in such a way that the treated plants, when subsequently inoculated with undesirable microorganisms, develop a high degree of resistance to these microorganisms.

Further, in context with the present invention plant physiology effects comprise the following:
Abiotic stress tolerance, comprising tolerance to high or low temperatures, drought tolerance and recovery after drought stress, water use efficiency (correlating to reduced water consumption), flood tolerance, ozone stress and UV tolerance, tolerance towards chemicals like heavy metals, salts, pesticides etc.

Biotic stress tolerance, comprising increased fungal resistance and increased resistance against nematodes, viruses and bacteria. In context with the present invention, biotic stress tolerance preferably comprises increased fungal resistance and increased resistance against nematodes.

Increased plant vigor, comprising plant health / plant quality and seed vigor, reduced stand failure, improved appearance, increased recovery after periods of stress, improved pigmentation (e.g. chlorophyll content, stay-green effects, etc.) and improved photosynthetic efficiency.

*Seed Treatment*

The invention further comprises a method for treating seed.

The invention further relates to seed which has been treated by one of the methods described in the previous paragraph. The inventive seeds are employed in methods for the protection of seed from unwanted microorganisms. In these methods, seed treated with at least one inventive active compound combination is used.

The inventive active compound combinations or compositions are also suitable for treating seed. A large part of the damage to crop plants caused by harmful organisms is triggered by the infection of the seed during storage or after sowing, and also during and after germination of the plant. This phase is particularly critical since the roots and shoots of the growing plant are particularly sensitive, and even minor damage may result in the death of the plant. There is therefore a great interest in protecting the seed and the germinating plant by using appropriate compositions.

The control of phytopathogenic fungi by treating the seed of plants has been known for a long time and is the subject of constant improvements. However, the treatment of seed entails a series of problems which cannot always be solved in a satisfactory manner. For instance, it is desirable to develop methods for protecting the seed and the germinating plant, which dispense with, or at least significantly reduce, the additional deployment of crop protection compositions after planting or after emergence of the plants. It is also desirable to optimize the amount of the active ingredient used so as to provide the best possible protection for the seed and the germinating plant from attack by phytopathogenic fungi, but without damaging the plant itself by the active ingredient employed. In particular, methods for the treatment of seed should also take account of the intrinsic fungicidal properties of transgenic plants in order to achieve optimal protection of the seed and the germinating plant with a minimum expenditure of crop protection compositions.

The present invention therefore also relates to a method for protection of seed and germinating plants from attack by phytopathogenic fungi, by treating the seed with an inventive composition. The invention likewise relates to the use of the inventive compositions for treatment of seed to protect the seed and the germinating plant from phytopathogenic fungi. The invention further relates to seed which has been treated with an inventive composition for protection from phytopathogenic fungi.

The control of phytopathogenic fungi which damage plants post-emergence is effected primarily by treating the soil and the above-ground parts of plants with crop protection compositions. Owing to the concerns regarding a possible influence of the crop protection compositions on the environment and the health of humans and animals, there are efforts to reduce the amount of active ingredients deployed.

One of the advantages of the present invention is that the particular systemic properties of the inventive active compound combinations and compositions mean that treatment of the seed with these active compound combinations

and compositions not only protects the seed itself, but also the resulting plants after emergence, from phytopathogenic fungi. In this way, the immediate treatment of the crop at the time of sowing or shortly thereafter can be dispensed with.

It is likewise considered to be advantageous that the inventive active compound combinations or compositions can especially also be used with transgenic seed, in which case the plant growing from this seed is capable of expressing a protein which acts against pests. By virtue of the treatment of such seed with the inventive active compound combinations or compositions, merely the expression of the protein, for example an insecticidal protein, can control certain pests.

The inventive compositions are suitable for protecting seed of any plant variety which is used in agriculture, in greenhouses, in forests or in horticulture and viticulture. In particular, this is the seed of cereals (such as wheat, barley, rye, triticale, sorghum/millet and oats), maize, cotton, soya beans, rice, potatoes, sunflower, bean, coffee, beet (for example sugar beet and fodder beet), peanut, oilseed rape, poppy, olive, coconut, cocoa, sugar cane, tobacco, vegetables (such as tomato, cucumbers, onions and lettuce), turf and ornamentals (see also below). The treatment of the seed of cereals (such as wheat, barley, rye, triticale and oats), maize and rice is of particular significance.

As also described herein, the treatment of transgenic seed with the inventive active compound combinations or compositions is of particular significance. This relates to the seed of plants containing at least one heterologous gene which enables the expression of a polypeptide or protein having insecticidal properties. The heterologous gene in transgenic seed can originate, for example, from microorganisms of the species *Bacillus, Rhizobium, Pseudomonas, Serrcttia, Trichoderma, Clavibacter, Glomus* or *Gliocladiaroa.* This heterologous gene preferably originates from *Bacillus* sp., in which case the gene product is effective against the European maize borer and/or the Western maize rootworm. The heterologous gene more preferably originates from *Bacillus thuringiensis.*

In the context of the present invention, the inventive composition is applied to the seed alone or in a suitable formulation. Preferably, the seed is treated in a state in which it is sufficiently stable for no damage to occur in the course of treatment. In general, the seed can be treated at any time between harvest and sowing. It is customary to use seed which has been separated from the plant and freed from cobs, shells, stalks, coats, hairs or the flesh of the fruits. For example, it is possible to use seed which has been harvested, cleaned and dried down to a moisture content of less than 15 % by weight. Alternatively, it is also possible to use seed which, after drying, for example, has been treated with water and then dried again.

When treating the seed, care must generally be taken that the amount of the inventive composition applied to the seed and/or the amount of further additives is selected such that the germination of the seed is not impaired, or that the resulting plant is not damaged. This has to be borne in mind in particular in the case of active ingredients which can have phytotoxic effects at certain application rates.

The inventive compositions can be applied directly, i.e. without containing any other components and without having been diluted. In general, it is preferable to apply the compositions to the seed in the form of a suitable formulation. Suitable formulations and methods for seed treatment are known to those skilled in the art and are described, for example, in the following documents: US 4,272,417, US 4,245,432, US 4,808,430, US 5,876,739, US 2003/0176428 A1, WO 2002/080675, WO 2002/028186.

The active compound combinations usable in accordance with the invention can be converted to the customary seed dressing formulations, such as solutions, emulsions, suspensions, powders, foams, slurries or other coating compositions for seed, and also ULV formulations.

These formulations are prepared in a known manner, by mixing the active compound combinations with customary additives, for example customary extenders and also solvents or diluents, dyes, wetting agents, dispersants, emulsifiers, antifoams, preservatives, secondary thickeners, adhesives, gibberellins and also water.

Useful dyes which may be present in the seed dressing formulations usable in accordance with the invention are all dyes which are customary for such purposes. It is possible to use either pigments, which are sparingly soluble in water, or dyes, which are soluble in water. Examples include the dyes known by the names Rhodamine B, C.I. Pigment Red 112 and C.I. Solvent Red 1.

Useful wetting agents which may be present in the seed dressing formulations usable in accordance with the invention are all substances which promote wetting and which are conventionally used for the formulation of active agrochemical ingredients. Preference is given to using alkyl naphthalenesulphonates, such as diisopropyl or diisobutyl naphthalenesulphonates.

Useful dispersants and/or emulsifiers which may be present in the seed dressing formulations usable in accordance with the invention are all nonionic, anionic and cationic dispersants conventionally used for the formulation of active agrochemical ingredients. Usable with preference are nonionic or anionic dispersants or mixtures of nonionic or anionic dispersants. Suitable nonionic dispersants include especially ethylene oxide/propylene oxide block polymers, alkylphenol polyglycol ethers and tristryrylphenol polyglycol ether, and the phosphated or sulphated derivatives thereof. Suitable anionic dispersants are especially lignosulphonates, polyacrylic acid salts and arylsulphonate/formaldehyde condensates.

Antifoams which may be present in the seed dressing formulations usable in accordance with the invention are all foam-inhibiting substances conventionally used for the formulation of active agrochemical ingredients. Silicone antifoams and magnesium stearate can be used with preference.

Preservatives which may be present in the seed dressing formulations usable in accordance with the invention are all substances usable for such purposes in agrochemical compositions. Examples include dichlorophene and benzyl alcohol hemiformal.

Secondary thickeners which may be present in the seed dressing formulations usable in accordance with the invention are all substances usable for such purposes in agrochemical compositions. Preferred examples include cellulose derivatives, acrylic acid derivatives, xanthan, modified clays and finely divided silica.

Adhesives which may be present in the seed dressing formulations usable in accordance with the invention are all customary binders usable in seed dressing products. Preferred examples include polyvinylpyrrolidone, polyvinyl acetate, polyvinyl alcohol and tylose.

The gibberellins which may be present in the seed dressing formulations usable in accordance with the invention may preferably be gibberellins A1, A3 (= gibberellic acid), A4 and A7; particular preference is given to using gibberellic acid. The gibberellins are known (cf. R. Wegler "Chemie der Pflanzenschutz- und Schadlingsbekampfangsmittel" [Chemistiy of the Crop Protection Compositions and Pesticides], vol. 2, Springer Verlag, 1970, p. 401-412).

The seed dressing formulations usable in accordance with the invention can be used, either directly or after previously having been diluted with water, for the treatment of a wide range of different seed, including the seed of transgenic plants.

For treatment of seed with the seed dressing formulations usable in accordance with the invention, or the preparations prepared therefrom by adding water, all mixing units usable customarily for the seed dressing are useful. Specifically, the procedure in the seed dressing is to place the seed into a mixer, to add the particular desired amount of seed dressing formulations, either as such or after prior dilution with water, and to mix everything until the formulation is distributed homogeneously on the seed. If appropriate, this is followed by a drying process.

*Application Rates and Timing*

In the active compound combinations according to the invention the compounds A and B are advantageously present in a weight ratio of A:B in a range of 100:1 to 1:100, preferably in a weight ratio of 50:1 to 1:50, more preferably in a weight ratio of 20:1 to 1:20, even more preferably in a weight ratio of 10:1 to 1:10.

Further ratios by weight of A:B which are preferably used within the weight ratio of 10:1 to 1:10 are 5:1 to 1:5, 4:1 to 1:4, 3:1 to 1:3, 2:1 to 1:2 and 1:1.

According to the invention the expression "active compound combination" stands for the various combinations of compounds (A) and (B), for example in a single "ready-mix" form, in a combined spray mixture composed from separate formulations of the single active compounds, such as a "tank-mix", and in a combined use of the single active ingredients when applied in a sequential manner, i.e. one after the other with a reasonably short period, such as a few hours or days. Preferably the order of applying the compounds (A) and (B) is not essential for working the present invention.

According to the invention the term "composition" means a combination of the active compound combination with further agriculturally suitable additives, such as agriculturally suitable auxiliaries, e.g. solvents, carriers, surfactants, extenders or the like which are described above. The term "composition" also comprises the terms "crop protection composition" and "formulation".

When using the inventive active compound combinations as fungicides, the application rates can be varied within a relatively wide range, depending on the kind of application. The application rate of the inventive active compound combinations is

in the case of treatment of plant parts, for example leaves: from 0.1 to 10 000 g/ha, preferably from 10 to 1000 g/ha, more preferably from 10 to 800 g/ha, even more preferably from 50 to 300 g/ha (in the case of application by watering or dripping, it is even possible to reduce the application rate, especially when inert substrates such as rockwool or perlite are used);

in the case of seed treatment: from 2 to 200 g per 100 kg of seed,

in the case of soil treatment: from 0.1 to 10 000 g/ha, preferably from 1 to 5000 g/ha.

These application rates are merely by way of example and are not limiting for the purposes of the invention.

The inventive active compound combinations or compositions can thus be used to protect plants from attack by the pathogens mentioned for a certain period of time after treatment. The period for which protection is provided extends generally for 1 to 28 days, preferably for 1 to 14 days, more preferably for 1 to 10 days, most preferably for 1 to 7 days, after the treatment of the plants with the active compound combinations, or for up to 200 days after a seed treatment.

The method of treatment according to the invention also provides the use or application of compounds (A) and (B) in a simultaneous, separate or sequential manner. If the single active ingredients are applied in a sequential manner, i.e. at different times, they are applied one after the other within a reasonably short period, such as a few hours or days. Preferably the order of applying the compounds (A) and (B) is not essential for working the present invention.

The plants listed can particularly advantageously be treated in accordance with the invention with the active compound combinations and the inventive compositions. The preferred ranges stated above for the active compound combinations or compositions also apply to the treatment of these plants. Particular emphasis is given to the treatment of plants with the active compound combinations or compositions specifically mentioned in the present text.

According to the present invention, an improved plant compatibility is always present when the degree of morphological, physiological and/or genetic tolerance of plants towards the active compound combinations is higher compared to such a tolerance of plants towards known compound combinations, i.e. the capacity of plants to endure the application of the active compound combinations, without exhibiting a high degree of plant damages caused by such active compound combinations as a side effect.

The present invention will now be illustrated with the following examples. However the invention is not limited to the examples.

**Plant compatibility test**

| | | |
|---|---|---|
| Solvent: | 24.5 | parts by weight of acetone |
| | 24.5 | parts by weight of dimethylacetamide |
| Emulsifier: | 1 | part by weight of alkylaryl polyglycol ether |

To produce a suitable preparation of active compound combinations, 1 part by weight of active compound was mixed with the stated amounts of solvent and emulsifier, and the concentrate was diluted with water to the desired concentration.

To illustrate the invention, the following compounds shown in Tables 0-1 and 0-2 were used as mixing partner (A) to generate the active compound combinations (A) + (B). However, the invention is not limited to the examples.

Table 0-1: Mixing partner (A) known from the art

| Active compound known from WO2008/110313 | |
|---|---|
| Compound number (1) | 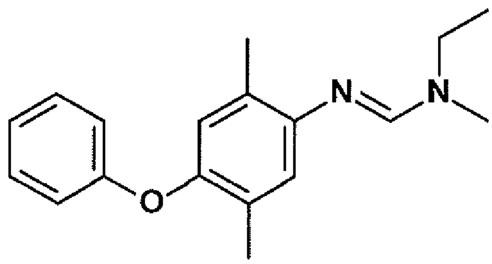 |

Table 0-2: Mixing partner (A) according to the invention

| Active compounds (A) **according to the invention** | |
|---|---|
| Compound (I-1) | 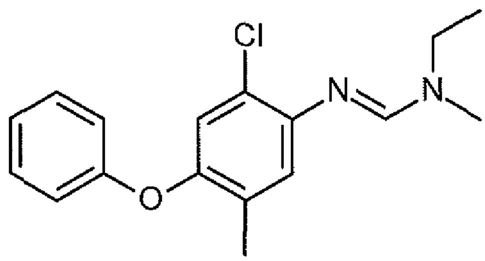 |

(continued)

| Active compounds (A) **according to the invention** | |
|---|---|
| Compound (I-2) | 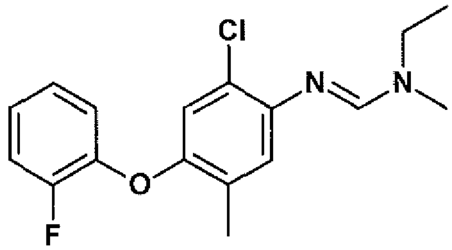 |

Young plants were sprayed with the preparation of active compound combinations at the application rates stated in the tables below. The plants were then placed in a greenhouse at approximately 21°C and a relative atmospheric humidity of approximately 80 %.

The test was evaluated 6 days after application and comprised the assessment of the relative plant compatibility of the inventive active compound combinations compared to known combinations. This means the degree of morphological, physiological and/or genetic tolerance of the plants towards the active compound combinations was evaluated, i.e. the capacity of the plants to endure the application of the active compound combinations, without exhibiting a high degree of plant damages caused by such active compound combinations as a side effect. "Plant damages" in this context were the following five negative plant phenotypical symptoms (i.e. plant damaging symptoms): leaf deformation, chlorosis, necrosis, shoot damage and stunting.

These plant damaging symptoms for active compound combinations were each phenotypically determined on a 0 to 100%-scale, wherein 0% means no damage was observed for the respective symptom in comparison to untreated control plants. All five damage values were summed up for each active compound combination to give the total damage value for the respective treatment.

The relative plant compatibility was assessed in comparison to active compound combinations comprising Compound (1) known from WO2008/110313 ("reference active compound combinations"). These reference active compound combinations have been proven to be fungicidally active but not to exhibit good plant compatibility according to the definitions given herein.

To calculate the relative plant compatibility, first, the above described sum of the phenotypical plant damaging symptoms after treatment was converted to percentage values, wherein the reference active compound combination in each case was set as the reference for 100% damage. The percentage values for the inventive active compound combinations were then put in proportion to this reference ("%-damage-value").

Second, to calculate the above described %-damage-values into relative plant compatibility values in %, the following conversion formula was used:

$$\text{Relative Plant Compatibility Value} = 100 - \text{\%-damage-value}$$

Consequently, 0% in Tables (1)-1 to (15)-1 is the lowest plant compatibility observed (e.g. after treatment with the reference active compound combinations), whereas 100% refers to the highest possible plant compatibility. That means, the higher the percentage in the below standing Tables, the better the plant compatibility of the inventive active compound combinations.

The results are summarized in Tables (1)-1 to (15)-1. The results clearly show that higher plant compatibilities of the inventive active compound combinations were observed than for known active compound combinations, i.e. an improved plant compatibility of the active compound combinations according to the invention was demonstrated.

Table (1)-1 Plant compatibility test:

| Plant compatibility of active compound combinations in soy bean, wherein the compound (B) is chosen from the group of inhibitors of the ergosterol biosynthesis, specifically (1.002) difenoconazole. | | |
|---|---|---|
| Active compound combinations (A) + (B) | Rate of application of active compound in ppm* a.i.** per combination | Relative plant compatibility value in % |
| Compound (1) from WO2008/110313 + (1.002) | 1000 + 1000 | 0 |
| Compound (1) from WO2008/110313 + (1.002) | 500 + 500 | 0 |
| Compound (I-1) + (1.002) | 1000 + 1000 | 77 |
| Compound (I-1) + (1.002) | 500 + 500 | 68 |
| Compound (I-2) + (1.002) | 1000 + 1000 | 91 |
| Compound (I-2) + (1.002) | 500 + 500 | 82 |
| * ppm = parts per million<br>**a.i. = active ingredient | | |

Table (1)-2 Plant compatibility test:

| Plant compatibility of active compound combinations in soy bean, wherein the compound (B) is chosen from the group of inhibitors of the ergosterol biosynthesis, specifically (1.021) tebuconazole. | | |
|---|---|---|
| Active compound combinations (A) + (B) | Rate of application of active compound in ppm* a.i.** per combination | Relative plant compatibility value in % |
| Compound (1) from WO2008/110313 + (1.021) | 1000 + 250 | 0 |
| Compound (1) from WO2008/110313 + (1.021) | 500 + 125 | 0 |
| Compound (I-1) + (1.021) | 1000 + 250 | 5 |
| Compound (I-1) + (1.021) | 500+ 125 | 43 |
| Compound (I-2) + (1.021) | 1000 + 250 | 36 |
| Compound (I-2) + (1.021) | 500 + 125 | 62 |
| * ppm = parts per million<br>**a.i. = active ingredient | | |

Table (1)-3 Plant compatibility test:

| Plant compatibility of active compound combinations in soy bean, wherein the compound (B) is chosen from the group of inhibitors of the ergosterol biosynthesis, specifically (1.018) Prothioconazole. | | |
|---|---|---|
| Active compound combinations (A) + (B) | Rate of application of active compound in ppm* a.i.** per combination | Relative plant compatibility value in % |
| Compound (1) from WO2008/110313 + (1.018) | 1000 + 400 | 0 |
| Compound (1) from WO2008/110313 + (1.018) | 500 + 200 | 0 |

(continued)

| Plant compatibility of active compound combinations in soy bean, wherein the compound (B) is chosen from the group of inhibitors of the ergosterol biosynthesis, specifically (1.018) Prothioconazole. | | |
|---|---|---|
| Active compound combinations (A) + (B) | Rate of application of active compound in ppm* a.i.** per combination | Relative plant compatibility value in % |
| Compound (I-1) + (1.018) | 1000 + 400 | 19 |
| Compound (I-1) + (1.018) | 500 + 200 | 18 |
| Compound (I-2) + (1.018) | 1000 + 400 | 24 |
| Compound (I-2) + (1.018) | 500 + 200 | 35 |
| * ppm = parts per million<br>**a.i. = active ingredient | | |

Table (1)-4 Plant compatibility test:

| Plant compatibility of active compound combinations in soy bean, wherein the compound (B) is chosen from the group of inhibitors of the ergosterol biosynthesis, specifically (1.081) Mefentrifluconazole. | | |
|---|---|---|
| Active compound combinations (A) + (B) | Rate of application of active compound in ppm* a.i.** per combination | Relative plant compatibility value in % |
| Compound (1) from WO2008/110313 + (1.081) | 1000 + 1000 | 0 |
| Compound (1) from WO2008/110313 + (1.081) | 500 + 500 | 0 |
| Compound (I-1) + (1.081) | 1000 + 1000 | 56 |
| Compound (I-1) + (1.081) | 500 + 500 | 69 |
| Compound (I-2) + (1.081) | 1000 + 1000 | 88 |
| Compound (I-2) + (1.081) | 500 + 500 | 85 |
| * ppm = parts per million<br>**a.i. = active ingredient | | |

Table (1)-5 Plant compatibility test:

| Plant compatibility of active compound combinations in soy bean, wherein the compound (B) is chosen from the group of inhibitors of the ergosterol biosynthesis, specifically (1.005) Fenpropidin. | | |
|---|---|---|
| Active compound combinations (A) + (B) | Rate of application of active compound in ppm* a.i.** per combination | Relative plant compatibility value in % |
| Compound (1) from WO2008/110313 + (1.005) | 1000 + 1000 | 0 |
| Compound (1) from WO2008/110313 + (1.005) | 500 + 500 | 0 |
| Compound (I-1) + (1.005) | 1000 + 1000 | 0 |
| Compound (I-1) + (1.005) | 500 + 500 | 29 |
| Compound (I-2) + (1.005) | 1000 + 1000 | 50 |

(continued)

| Active compound combinations (A) + (B) | Rate of application of active compound in ppm* a.i.** per combination | Relative plant compatibility value in % |
|---|---|---|
| Compound (I-2) + (1.005) | 500 + 500 | 48 |
| * ppm = parts per million<br>**a.i. = active ingredient | | |

Table (1)-6 Plant compatibility test:

| Plant compatibility of active compound combinations in soy bean, wherein the compound (B) is chosen from the group of inhibitors of the ergosterol biosynthesis, specifically (1.006) Fenpropimorph. | | |
|---|---|---|
| Active compound combinations (A) + (B) | Rate of application of active compound in ppm* a.i.** per combination | Relative plant compatibility value in % |
| Compound (1) from WO2008/110313 + (1.006) | 1000 + 1000 | 0 |
| Compound (1) from WO2008/110313 + (1.006) | 500 + 500 | 0 |
| Compound (I-1) + (1.006) | 1000 + 1000 | 5 |
| Compound (I-1) + (1.006) | 500 + 500 | 10 |
| Compound (I-2) + (1.006) | 1000 + 1000 | 7 |
| Compound (I-2) + (1.006) | 500 + 500 | 29 |
| * ppm = parts per million<br>**a.i. = active ingredient | | |

Table (1)-7 Plant compatibility test:

| Plant compatibility of active compound combinations in soy bean, wherein the compound (B) is chosen from the group of inhibitors of the ergosterol biosynthesis, specifically (1.020) Spiroxamine. | | |
|---|---|---|
| Active compound combinations (A) + (B) | Rate of application of active compound in ppm* a.i.** per combination | Relative plant compatibility value in % |
| Compound (1) from WO2008/110313 + (1.020) | 1000 + 1000 | 0 |
| Compound (1) from WO2008/110313 + (1.020) | 500 + 500 | 0 |
| Compound (I-1) + (1.020) | 1000 + 1000 | 47 |
| Compound (I-1) + (1.020) | 500 + 500 | 26 |
| Compound (I-2) + (1.020) | 1000 + 1000 | 55 |
| Compound (I-2) + (1.020) | 500 + 500 | 32 |
| * ppm = parts per million<br>**a.i. = active ingredient | | |

Table (2)-1 Plant compatibility test:

| Plant compatibility of active compound combinations in soy bean, wherein the compound (B) is chosen from the group of inhibitors of the respiratory chain at complex I or II, specifically (2.001) benzovindiflupyr. | | |
|---|---|---|
| Active compound combinations (A) + (B) | Rate of application of active compound in ppm* a.i.** per combination | Relative plant compatibility value in % |
| Compound (1) from WO2008/110313 + (2.001) | 1000 + 1000 | 0 |
| Compound (1) from WO2008/110313 + (2.001) | 500 + 500 | 0 |
| Compound (I-1) + (2.001) | 1000 + 1000 | 41 |
| Compound (I-1) + (2.001) | 500 + 500 | 14 |
| Compound (I-2) + (2.001) | 1000 + 1000 | 55 |
| Compound (I-2) + (2.001) | 500 + 500 | 67 |
| * ppm = parts per million<br>**a.i. = active ingredient | | |

Table (2)-2 Plant compatibility test:

| Plant compatibility of active compound combinations in soy bean, wherein the compound (B) is chosen from the group of inhibitors of the respiratory chain at complex I or II, specifically (2.002) bixafen. | | |
|---|---|---|
| Active compound combinations (A) + (B) | Rate of application of active compound in ppm* a.i.** per combination | Relative plant compatibility value in % |
| Compound (1) from WO2008/110313 + (2.002) | 1000 + 1000 | 0 |
| Compound (1) from WO2008/110313 + (2.002) | 500 + 500 | 0 |
| Compound (I-1) + (2.002) | 1000 + 1000 | 13 |
| Compound (I-1) + (2.002) | 500 + 500 | 11 |
| Compound (I-2) + (2.002) | 1000 + 1000 | 40 |
| Compound (I-2) + (2.002) | 500 + 500 | 46 |
| * ppm = parts per million<br>**a.i. = active ingredient | | |

Table (2)-3 Plant compatibility test:

| Plant compatibility of active compound combinations in soy bean, wherein the compound (B) is chosen from the group of inhibitors of the respiratory chain at complex I or II, specifically (2.005) fluopyram. | | |
|---|---|---|
| Active compound combinations (A) + (B) | Rate of application of active compound in ppm* a.i.** per combination | Relative plant compatibility value in % |
| Compound (1) from WO008/110313 + (2.005) | 1000 + 1000 | 0 |
| Compound (1) from WO2008/110313 + (2.005) | 500 + 500 | 0 |

(continued)

| Active compound combinations (A) + (B) | Rate of application of active compound in ppm* a.i.** per combination | Relative plant compatibility value in % |
|---|---|---|
| Compound (I-1) + (2.005) | 1000 + 1000 | 11 |
| Compound (I-1) + (2.005) | 500 + 500 | 67 |
| Compound (I-2) + (2.005) | 1000 + 1000 | 59 |
| Compound (I-2) + (2.005) | 500 + 500 | 63 |
| * ppm = parts per million<br>**a.i. = active ingredient | | |

Table (2)-4 Plant compatibility test:

| Plant compatibility of active compound combinations in soy bean, wherein the compound (B) is chosen from the group of inhibitors of the respiratory chain at complex I or II, specifically (2.027) 3-(difluoromethyl)-1-methyl-N-(1,1,3-trimethyl-2,3-dihydro-1H-inden-4-yl)-1H-pyrazole-4-carboxamide. | | |
|---|---|---|
| Active compound combinations (A) + (B) | Rate of application of active compound in ppm* a.i.** per combination | Relative plant compatibility value in % |
| Compound (1) from WO2008/110313 + (2.027) | 1000 + 1000 | 0 |
| Compound (1) from WO2008/110313 + (2.027) | 500 + 500 | 0 |
| Compound (I-1) + (2.027) | 1000 + 1000 | 42 |
| Compound (I-1) + (2.027) | 500 + 500 | 56 |
| Compound (I-2) + (2.027) | 1000 + 1000 | 62 |
| Compound (I-2) + (2.027) | 500 + 500 | 83 |
| * ppm = parts per million<br>**a.i. = active ingredient | | |

Table (2)-5 Plant compatibility test:

| Plant compatibility of active compound combinations in soy bean, wherein the compound (B) is chosen from the group of inhibitors of the respiratory chain at complex I or II, specifically (2.007) Fluxapyroxad. | | |
|---|---|---|
| Active compound combinations (A) + (B) | Rate of application of active compound in ppm* a.i.** per combination | Relative plant compatibility value in % |
| Compound (1) from WO2008/110313 + (2.007) | 1000 + 1000 | 0 |
| Compound (1) from WO2008/110313 + (2.007) | 500 + 500 | 0 |
| Compound (I-1) + (2.007) | 1000 + 1000 | 42 |
| Compound (I-1) + (2.007) | 500 + 500 | 8 |
| Compound (I-2) + (2.007) | 1000 + 1000 | 74 |

(continued)

| Plant compatibility of active compound combinations in soy bean, wherein the compound (B) is chosen from the group of inhibitors of the respiratory chain at complex I or II, specifically (2.007) Fluxapyroxad. | | |
|---|---|---|
| Active compound combinations (A) + (B) | Rate of application of active compound in ppm* a.i.** per combination | Relative plant compatibility value in % |
| Compound (I-2) + (2.007) | 500 + 500 | 42 |
| * ppm = parts per million<br>**a.i. = active ingredient | | |

Table (2)-6 Plant compatibility test:

| Plant compatibility of active compound combinations in soy bean, wherein the compound (B) is chosen from the group of inhibitors of the respiratory chain at complex I or II, specifically (2.019) Pydiflumetofen. | | |
|---|---|---|
| Active compound combinations (A) + (B) | Rate of application of active compound in ppm* a.i.** per combination | Relative plant compatibility value in % |
| Compound (1) from WO2008/110313 + (2.019) | 1000 + 1000 | 0 |
| Compound (1) from WO2008/110313 + (2.019) | 500 + 500 | 0 |
| Compound (I-1) + (2.019) | 1000 + 1000 | 33 |
| Compound (I-1) + (2.019) | 500 + 500 | 15 |
| Compound (I-2) + (2.019) | 1000 + 1000 | 67 |
| Compound (I-2) + (2.019) | 500 + 500 | 62 |
| * ppm = parts per million<br>**a.i. = active ingredient | | |

Table (2)-7 Plant compatibility test:

| Plant compatibility of active compound combinations in soy bean, wherein the compound (B) is chosen from the group of inhibitors of the respiratory chain at complex I or II, specifically (2.057) 2-(difluoromethyl)-N-(1,1-dimethyl-3-propyl-2,3-dihydro-1H-inden-4-yl)nicotinamide. | | |
|---|---|---|
| Active compound combinations (A) + (B) | Rate of application of active compound in ppm* a.i.** per combination | Relative plant compatibility value in % |
| Compound (1) from WO2008/110313 + (2.057) | 1000+ 1000 | 0 |
| Compound (1) from WO2008/110313 + (2.057) | 500 + 500 | 0 |
| Compound (I-1) + (2.057) | 1000 + 1000 | 38 |
| Compound (I-1) + (2.057) | 500 + 500 | 42 |
| Compound (I-2) + (2.057) | 1000 + 1000 | 81 |
| Compound (I-2) + (2.057) | 500 + 500 | 74 |
| * ppm = parts per million<br>**a.i. = active ingredient | | |

Table (2)-8 Plant compatibility test:

| Plant compatibility of active compound combinations in soy bean, wherein the compound (B) is chosen from the group of inhibitors of the respiratory chain at complex I or II, specifically (2.030) Fluindapyr (3-(difluoromethyl)-N-(7-fluoro-1,1,3-trimethyl-2,3-dihydro-1H-inden-4-yl)-1-methyl-1H-pyrazole-4-carboxamide). | | |
|---|---|---|
| Active compound combinations (A) + (B) | Rate of application of active compound in ppm* a.i.** per combination | Relative plant compatibility value in % |
| Compound (1) from WO2008/110313 + (2.030) | 1000 + 1000 | 0 |
| Compound (1) from WO2008/110313 + (2.030) | 500 + 500 | 0 |
| Compound (I-1) + (2.030) | 1000 + 1000 | 42 |
| Compound (I-1) + (2.030) | 500 + 500 | 67 |
| Compound (I-2) + (2.030) | 1000 + 1000 | 85 |
| Compound (I-2) + (2.030) | 500 + 500 | 94 |
| * ppm = parts per million<br>**a.i. = active ingredient | | |

Table (3)-1 Plant compatibility test:

| Plant compatibility of active compound combinations in soy bean, wherein the compound (B) is chosen from the group of inhibitors of the respiratory chain at complex III, specifically (3.016) picoxystrobin. | | |
|---|---|---|
| Active compound combinations (A) + (B) | Rate of application of active compound in ppm* a.i.** per combination | Relative plant compatibility value in % |
| Compound (1) from WO2008/110313 + (3.016) | 1000 + 1000 | 0 |
| Compound (1) from WO2009/110313 + (3.016) | 500 + 500 | 0 |
| Compound (I-1) + (3.016) | 1000 + 1000 | 37 |
| Compound (I-1) + (3.016) | 500 + 500 | 64 |
| Compound (I-2) + (3.016) | 1000 + 1000 | 56 |
| Compound (I-2) + (3.016) | 500 + 500 | 72 |
| * ppm = parts per million<br>**a.i. = active ingredient | | |

Table (3)-2 Plant compatibility test:

| Plant compatibility of active compound combinations in soy bean, wherein the compound (B) is chosen from the group of inhibitors of the respiratory chain at complex III, specifically (3.020) trifloxystrobin. | | |
|---|---|---|
| Active compound combinations (A) + (B) | Rate of application of active compound in ppm* a.i.** per combination | Relative plant compatibility value in % |
| Compound (1) from WO2008/110313 + (3.020) | 1000 + 1000 | 0 |

(continued)

| Plant compatibility of active compound combinations in soy bean, wherein the compound (B) is chosen from the group of inhibitors of the respiratory chain at complex III, specifically (3.020) trifloxystrobin. | | |
|---|---|---|
| Active compound combinations (A) + (B) | Rate of application of active compound in ppm* a.i.** per combination | Relative plant compatibility value in % |
| Compound (1) from WO2008/110313 + (3.020) | 500 + 500 | 0 |
| Compound (I-1) + (3.020) | 1000 + 1000 | 32 |
| Compound (I-1) + (3.020) | 500 + 500 | 33 |
| Compound (I-2) + (3.020) | 1000 + 1000 | 64 |
| Compound (I-2) + (3.020) | 500 + 500 | 61 |
| * ppm = parts per million<br>**a.i. = active ingredient | | |

Table (3)-3 Plant compatibility test:

| Plant compatibility of active compound combinations in soy bean, wherein the compound (B) is chosen from the group of inhibitors of the respiratory chain at complex III, specifically (3.025) Fenpicoxamid ((3S,6S,7R,8R)-8-benzyl-3-[({3-[(isobutyryloxy)methoxy]-4-methoxypyridin-2-yl}carbonyl)amino]-6-methyl-4,9-dioxo-1,5-dioxonan-7-yl 2-methylpropanoate). | | |
|---|---|---|
| Active compound combinations (A) + (B) | Rate of application of active compound in ppm* a.i.** per combination | Relative plant compatibility value in % |
| Compound (1) from WO2008/110313 + (3.025) | 1000 + 1000 | 0 |
| Compound (1) from WO2008/110313 + (3.025) | 500 + 500 | 0 |
| Compound (I-1) + (3.025) | 1000 + 1000 | 38 |
| Compound (I-1) + (3.025) | 500 + 500 | 41 |
| Compound (I-2) + (3.025) | 1000 + 1000 | 71 |
| Compound (I-2) + (3.025) | 500 + 500 | 88 |
| * ppm = parts per million<br>**a.i. = active ingredient | | |

Table (3)-4 Plant compatibility test:

| Plant compatibility of active compound combinations in soy bean, wherein the compound (B) is chosen from the group of inhibitors of the respiratory chain at complex 111, specifically (3.026) Mandestrobin (2-{2-[(2,5-dimethylphenoxy)methyl]phenyl}-2-methoxy-N-methylacetamide). | | |
|---|---|---|
| Active compound combinations (A) + (B) | Rate of application of active compound in ppm* a.i.** per combination | Relative plant compatibility value in % |
| Compound (1) from WO2008/110313 + (3.026) | 1000 + 1000 | 0 |
| Compound (1) from WO2008/110313 + (3.026) | 500 + 500 | 0 |

(continued)

| Plant compatibility of active compound combinations in soy bean, wherein the compound (B) is chosen from the group of inhibitors of the respiratory chain at complex 111, specifically (3.026) Mandestrobin (2-{2-[(2,5-dimethylphenoxy)methyl]phenyl}-2-methoxy-N-methylacetamide). | | |
|---|---|---|
| Active compound combinations (A) + (B) | Rate of application of active compound in ppm* a.i.** per combination | Relative plant compatibility value in % |
| Compound (I-1) + (3.026) | 1000 + 1000 | 37 |
| Compound (I-1) + (3.026) | 500 + 500 | 50 |
| Compound (I-2) + (3.026) | 1000 + 1000 | 70 |
| Compound (I-2) + (3.026) | 500 + 500 | 86 |
| * ppm = parts per million<br>**a.i. = active ingredient | | |

Table (3)-5 Plant compatibility test:

| Plant compatibility of active compound combinations in soy bean, wherein the compound (B) is chosen from the group of inhibitors of the respiratory chain at complex III, specifically (3.030) 1-(2-{[1-(4-chlrophenyl)pyrazol-3-yl] oxymethyl}-3-methylphenyl)-1,4-dihydro-4-methyl-5*H*-tetrazol-5-one (Metyltetraprole). | | |
|---|---|---|
| Active compound combinations (A) + (B) | Rate of application of active compound in ppm* a.i.** per combination | Relative plant compatibility value in % |
| Compound (1) from WO2008/110313 + (3.030) | 1000 + 1000 | 0 |
| Compound (1) from WO2008/110313 + (3.030) | 500 + 500 | 0 |
| Compound (I-1) + (3.030) | 1000 + 1000 | 45 |
| Compound (I-1) + (3.030) | 500 + 500 | 88 |
| Compound (I-2) + (3.030) | 1000 + 1000 | 90 |
| Compound (I-2) + (3.030) | 500 + 500 | 82 |
| * ppm = parts per million<br>**a.i. = active ingredient | | |

Table (5)-1 Plant compatibility test:

| Plant compatibility of active compound combinations in soy bean, wherein the compound (B) is chosen from the group of compounds capable to have a multisite action, specifically (5.004) chlorothalonil. | | |
|---|---|---|
| Active compound combinations (A) + (B) | Rate of application of active compound in ppm* a.i.** per combination | Relative plant compatibility value in % |
| Compound (1) from WO2008/110313 + (5.004) | 1000 + 1000 | 0 |
| Compound (1) from WO2008/110313 + (5.004) | 500 + 500 | 0 |
| Compound (I-1) + (5.004) | 1000 + 1000 | 28 |
| Compound (I-1) + (5.004) | 500 + 500 | 69 |

(continued)

| Active compound combinations (A) + (B) | Rate of application of active compound in ppm* a.i.** per combination | Relative plant compatibility value in % |
|---|---|---|
| Compound (I-2) + (5.004) | 1000 + 1000 | 61 |
| Compound (I-2) + (5.004) | 500 + 500 | 69 |
| * ppm = pails per million<br>**a.i. = active ingredient | | |

Table (5)-2 Plant compatibility test:

| Plant compatibility of active compound combinations in soy bean, wherein the compound (B) is chosen from the group of compounds capable to have a multisite action, specifically (5.013) mancozeb. | | |
|---|---|---|
| Active compound combinations (A) + (B) | Rate of application of active compound in ppm* a.i.** per combination | Relative plant compatibility value in % |
| Compound (1) from WO2008/110313 + (5.013) | 1000 + 1000 | 0 |
| Compound (1) from WO2008/110313 + (5.013) | 500 + 500 | 0 |
| Compound (I-1) + (5.013) | 1000 + 1000 | 38 |
| Compound (I-1) + (5.013) | 500 + 500 | 64 |
| Compound (I-2) + (5.013) | 1000 + 1000 | 57 |
| Compound (I-2) + (5.013) | 500 + 500 | 82 |
| * ppm = parts per million<br>**a.i. = active ingredient | | |

Table (5)-3 Plant compatibility test:

| Plant compatibility of active compound combinations in soy bean, wherein the compound (B) is chosen from the group of compounds capable to have a multisite action, specifically (5.018) propineb. | | |
|---|---|---|
| Active compound combinations (A) + (B) | Rate of application of active compound in ppm* a.i.** per combination | Relative plant compatibility value in % |
| Compound (1) from WO2008/110313 + (5.018) | 1000 + 1000 | 0 |
| Compound (1) from WO2008/110313 + (5.018) | 500 + 500 | 0 |
| Compound (I-1) + (5.018) | 1000 + 1000 | 9 |
| Compound (I-1) + (5.018) | 500 + 500 | 58 |
| Compound (I-2) + (5.018) | 1000 + 1000 | 59 |
| Compound (I-2) + (5.018) | 500 + 500 | 89 |
| * ppm = parts per million<br>**a.i. = active ingredient | | |

Table (15)-1 Plant compatibility test:

| Plant compatibility of active compound combinations in soy bean, wherein the compound (B) is chosen from the group of inhibitors of the respiratory chain at complex III, specifically (15.047) Quinofumelin (3-(4,4-difluoro-3,3-dimethyl-3,4-dihydroisoquinolin-1-yl) quinoline). | | |
|---|---|---|
| Active compound combinations (A) + (B) | Rate of application of active compound in ppm* a.i.** per combination | Relative plant compatibility value in % |
| Compound (1) from WO2008/110313 + (15.047) | 1000 + 1000 | 0 |
| Compound (1) from WO2008/110313 + (15.047) | 500 + 500 | 0 |
| Compound (I-1) + (15.047) | 1000 + 1000 | 78 |
| Compound (I-1) + (15.047) | 500 + 500 | 80 |
| Compound (I-2) + (15.047) | 1000 + 1000 | 91 |
| Compound (I-2) + (15.047) | 500 + 500 | 75 |
| * ppm = parts per million<br>**a.i. = active ingredient | | |

## Claims

1. Active compound combination comprising

(A) a compound selected from the group consisting of (I-1) N'-(2-chloro-5-methyl-4-phenoxyphenyl)-N-ethyl-N-methylimidoformamide, (I-2) N'-[2-chloro-4-(2-fluorophenoxy)-5-methylphenyl]-N-ethyl-N-methylimidoformamide, and salts, N-oxides, metal complexes or stereoisomers thereof;
and
(B) at least one further active compound selected from the group consisting of (1.002) difenoconazole, (1.005) fenpropidin, (1.006) fenpropimorph, (1.018) prothioconazole, (1.020) spiroxamine, (1.021) tebuconazole, (1.081) Mefentrifluconazole, (2.001) benzovindiflupyr, (2.002) bixafen, (2.005) fluopyram, (2.007) fluxapyroxad, (2.019) pydiflumetofen, (2.027) 3-(difluoromethyl)-1-methyl-N-(1,1,3-trimethyl-2,3-dihydro-1H-inden-4-yl)-1H-pyrazole-4-carboxamide, (2.030) 3-(difluoromethyl)-N-(7-fluoro-1,1,3-trimethyl-2,3-dihydro-1H-inden-4-yl)-1-methyl-1H-pyrazole-4-carboxamide, (2.057) 2-(difluoromethyl)-N-(1,1-dimethyl-3-propyl-2,3-dihydro-1H-inden-4-yl)nicotinamide, (3.016) picoxystrobin, (3.020) trifloxystrobin, (3.025) (3S,6S,7R,8R)-8-benzyl-3-[({3-[(isobutyryloxy)methoxy]-4-methoxypyridin-2-yl}carbonyl)amino]-6-methyl-4,9-dioxo-1,5-dioxonan-7-yl 2-methylpropanoate, (3.026) 2-{2-[(2,5-dimethylphenoxy)methyl]phenyl}-2-methoxy-N-methylacetamide, (3.030) 1-(2-{[1-(4-chlorophenyl)pyrazol-3-yl]oxymethyl}-3-methylphenyl)-1,4-dihydro-4-methyl-5H-tetrazol-5-one, (5.004) chlorothalonil, (5.013) mancozeb, (5.018) propineb and (15.047) 3-(4,4-difluoro-3,3-dimethyl-3,4-dihydroisoquinolin-1-yl)quinoline.

2. Active compound combination according to claim 1, wherein the further active compound (B) is selected from the group consisting of (1.002) difenoconazole, (1.018) prothioconazole, (1.021) tebuconazole, (2.001) benzovindiflupyr, (2.002) bixafen, (2.005) fluopyram, (2.027) 3-(difluoromethyl)-1-methyl-N-(1,1,3-trimethyl-2,3-dihydro-1H-inden-4-yl)-1H-pyrazole-4-carboxamide, (3.016) picoxystrobin, (3.020) trifloxystrobin, (5.004) chlorothalonil, (5.013) mancozeb and (5.018) propineb.

3. Active compound combination according to claim 1 or 2, wherein the compound (A) selected from the group consisting of (I-1) N'-(2-chloro-5-methyl-4-phenoxyphenyl)-N-ethyl-N-methylimidoformamide, (I-2) N'-[2-chloro-4-(2-fluorophenoxy)-5-methylphenyl]-N-ethyl-N-methylimidoformamide, and salts, N-oxides, metal complexes or stereoisomers thereof, is compound (I-1) N'-(2-chloro-5-methyl-4-phenoxyphenyl)-N-ethyl-N-methylimidoformamide.

4. Active compound combination according to claim 1 or 2, wherein the compound (A) selected from the group consisting

of (I-1) N'-(2-chloro-5-methyl-4-phenoxyphenyl)-N-ethyl-N-methylimidoformamide, (I-2) N'-[2-chloro-4-(2-fluorophenoxy)-5-methylphenyl]-N-ethyl-N-methylimidoformamide, and salts, N-oxides, metal complexes or stereoisomers thereof, is compound (I-2) N'-[2-chloro-4-(2-fluorophenoxy)-5-methylphenyl]-N-ethyl-N-methylimidoformamide.

5. Active compound combination according to one of the claims 1 to 4, wherein the weight ratio of A:B is in the range of 100:1 to 1:100, preferably in a weight ratio of 50:1 to 1:50, more preferably in a weight ratio of 20:1 to 1:20, even more preferably in a weight ratio of 10:1 to 1:10.

6. Compositions comprising active compound combinations according to one of the claims 1 to 5 and further comprising auxiliaries, solvents, carriers, surfactants or extenders.

7. Method for controlling phytopathogenic fungi in crop protection, **characterized in that** active compound combinations according to one of the claims 1 to 5 or compositions according to claim 6 are applied to the seed, the plant, to fruits of plants or to the soil on which the plant grows or is supposed to grow.

8. Use of active compound combinations according to one of the claims 1 to 5 or of compositions according to claim 6 for controlling unwanted phytopathogenic fungi in crop protection.

9. Use of active compound combinations according to one of the claims 1 to 5 or of compositions according to claim 6 for treating seed, seed of transgenic plants and transgenic plants.

10. Seed comprising active compound combinations according to one of the claims 1 to 5 or compositions according to claim 6.

## Patentansprüche

1. Wirkstoffkombination, umfassend:

   (A) eine Verbindung ausgewählt aus der Gruppe bestehend aus (I-1) N'-(2-Chlor-5-methyl-4-phenoxyphenyl)-N-ethyl-N-methylimidoformamid, (I-2) N'-[2-Chlor-4-(2-fluorphenoxy)-5-methylphenyl]-N-ethyl-N-methylimidoformamid und Salzen, N-Oxiden, Metallkomplexen oder Stereoisomeren davon
   und
   (B) mindestens einen weiteren Wirkstoff ausgewählt aus der Gruppe bestehend aus (1.002) Difenoconazol, (1.005) Fenpropidin, (1.006) Fenpropimorph, (1.018) Prothioconazol, (1.020) Spiroxamin, (1.021) Tebuconazol, (1.081) Mefentrifluconazol, (2.001) Benzovindiflupyr, (2.002) Bixafen, (2.005) Fluopyram, (2.007) Fluxapyroxad, (2.019) Pydiflumetofen, (2.027) 3-(Difluormethyl)-1-methyl-N-(1,1,3-trimethyl-2,3-dihydro-1H-inden-4-yl)-1H-pyrazol-4-carboxamid, (2.030) 3-(Difluormethyl)-N-(7-fluor-1,1,3-trimethyl-2,3-dihydro-1H-inden-4-yl)-1-methyl-1H-pyrazol-4-carboxamid, (2.057) 2-(Difluormethyl)-N-(1,1-dimethyl-3-propyl-2,3-dihydro-1H-inden-4-yl)nicotinamid, (3.016) Picoxystrobin, (3.020) Trifloxystrobin, (3.025) (3S,6S,7R,8R)-2-Methylpropansäure-8-benzyl-3-[({3-[(isobutyryloxy)methoxy]-4-methoxypyridin-2-yl}carbonyl)amino]-6-methyl-4,9-dioxo-1,5-dioxonan-7-ylester, (3.026) 2-{2-[(2,5-Dimethylphenoxy)methyl]phenyl}2-methoxy-N-methylacetamid, (3.030) 1-(2-{[1-(4-Chlorphenyl)pyrazol-3-yl]oxymethyl}-3-methylphenyl)-1,4-dihydro-4-methyl-5H-tetrazol-5-on, (5.004) Chlorothalonil, (5.013) Mancozeb, (5.018) Propineb und (15.047) 3-(4,4-Difluor-3,3-dimethyl-3,4-dihydroisochinolin-1-yl)chinolin.

2. Wirkstoffkombination nach Anspruch 1, wobei der weitere Wirkstoff (B) ausgewählt ist aus der Gruppe bestehend aus (1.002) Difenoconazol, (1.018) Prothioconazol, (1.021) Tebuconazol, (2.001) Benzovindiflupyr, (2.002) Bixafen, (2.005) Fluopyram, (2.027) 3-(Difluormethyl)-1-methyl-N-(1,1,3-trimethyl-2,3-dihydro-1H-inden-4-yl)-1H-pyrazol-4-carboxamid, (3.016) Picoxystrobin, (3.020) Trifloxystrobin, (5.004) Chlorothalonil, (5.013) Mancozeb und (5.018) Propineb.

3. Wirkstoffkombination nach Anspruch 1 oder 2, wobei es sich bei der aus der Gruppe bestehend aus (I-1) N'-(2-Chlor-5-methyl-4-phenoxyphenyl)-N-ethyl-N-methylimidoformamid, (I-2) N'-[2-Chlor-4-(2-fluorphenoxy)-5-methylphenyl]-N-ethyl-N-methylimodoformamid und Salzen, N-Oxiden, Metallkomplexen oder Stereoisomeren davon ausgewählten Verbindung (A) um die Verbindung (I-1) N'-(2-Chlor-5-methyl-4-phenoxyphenyl)-N-ethyl-N-methylimodoformamid handelt.

4. Wirkstoffkombination nach Anspruch 1 oder 2, wobei es sich bei der aus der Gruppe bestehend aus (I-1) N'-(2-Chlor-5-methyl-4-phenoxyphenyl)-N-ethyl-N-methylimidoformamid, (I-2) N'-[2-Chlor-4-(2-fluorphenoxy)-5-methylphenyl]-N-ethyl-N-methylimodoformamid und Salzen, N-Oxiden, Metallkomplexen oder Stereoisomeren davon ausgewählten Verbindung (A) um die Verbindung (I-2) N'-[2-Chlor-4-(2-fluorphenoxy)-5-methylphenyl]-N-ethyl-N-methylimidoformamid handelt.

5. Wirkstoffkombination nach einem der Ansprüche 1 bis 4, wobei das Gewichtsverhältnis von A:B in einem Bereich von 100:1 bis 1:100, vorzugsweise in einem Gewichtsverhältnis von 50:1 bis 1:50, besonders bevorzugt in einem Gewichtsverhältnis von 20:1 bis 1:20, noch mehr bevorzugt in einem Gewichtsverhältnis von 10:1 bis 1:10, liegt.

6. Zusammensetzungen, umfassend Wirkstoffkombinationen nach einem der Ansprüche 1 bis 5 und weiterhin umfassend Hilfsstoffe, Lösungsmittel, Träger, Tenside oder Streckmittel.

7. Verfahren zur Bekämpfung phytopathogener Pilze im Pflanzenschutz, **dadurch gekennzeichnet, dass** man die Wirkstoffkombinationen nach einem der Ansprüche 1 bis 5 oder Zusammensetzungen nach Anspruch 6 auf das Saatgut, die Pflanzen, auf Früchte von Pflanzen oder auf den Boden, auf dem die Pflanzen wachsen oder wachsen sollen, ausbringt.

8. Verwendung von Wirkstoffkombinationen nach einem der Ansprüche 1 bis 5 oder von Zusammensetzungen nach Anspruch 6 zur Bekämpfung unerwünschter phytopathogener Pilze im Pflanzenschutz.

9. Verwendung von Wirkstoffkombinationen nach einem der Ansprüche 1 bis 5 oder von Zusammensetzungen nach Anspruch 6 zur Behandlung von Saatgut, Saatgut von transgenen Pflanzen und transgenen Pflanzen.

10. Saatgut, umfassend Wirkstoffkombinationen nach einem der Ansprüche 1 bis 5 oder Zusammensetzungen nach Anspruch 6.

## Revendications

1. Combinaison de composés actifs comprenant

   (A) un composé choisi dans le groupe constitué par (I-1) N'-(2-chloro-5-méthyl-4-phénoxyphényl)-N-éthyl-N-méthylimidoformamide, (I-2) N'-[2-chloro-4-(2-fluorophénoxy)-5-méthylphényl]-N-éthyl-N-méthylimidoformamide, et des sels, des N-oxydes, des complexes métalliques ou des stéréoisomères correspondants ;
   et
   (B) au moins un composé actif supplémentaire choisi dans le groupe constitué par (1.002) difénoconazole, (1.005) fenpropidine, (1.006) fenpropimorphe, (1.018) prothioconazole, (1.020) spiroxamine, (1.021) tébuconazole, (1.081) méfentrifluconazole, (2.001) benzovindiflupyr, (2.002) bixafen, (2.005) fluopyram, (2.007) fluxapyroxad, (2.019) pydiflumetofen, (2.027) 3-(difluorométhyl)-1-méthyl-N-(1,1,3-triméthyl-2,3-dihydro-1H-indén-4-yl)-1H-pyrazole-4-carboxamide, (2.030) 3-(difluorométhyl)-N-(7-fluoro-1,1,3-triméthyl-2,3-dihydro-1H-indén-4-yl)-1-méthyl-1H-pyrazole-4-carboxamide, (2.057) 2-(difluorométhyl)-N-(1,1-diméthyl-3-propyl-2,3-dihydro-1H-indén-4-yl)nicotinamide, (3.016) picoxystrobine, (3.020) trifloxystrobine, (3.025) 2-méthylpropanoate de (3S,6S,7R,8R)-8-benzyl-3-[({3-[(isobutyryloxy)méthoxy]-4-méthoxypyridin-2-yl}carbonyl)amino]-6-méthyl-4,9-dioxo-1,5-dioxonan-7-yle, (3.026) 2-{2-[(2,5-diméthylphénoxy)méthyl]phényl}-2-méthoxy-N-méthylacétamide, (3.030) 1-(2-{[1-(4-chlorophényl)pyrazol-3-yl]oxyméthyl}-3-méthylphényl)-1,4-dihydro-4-méthyl-5H-tétrazol-5-one, (5.004) chlorothalonil, (5.013) mancozeb, (5.018) propineb et (15.047) 3-(4,4-difluoro-3,3-diméthyl-3,4-dihydroisoquinolin-1-yl)quinoléine.

2. Combinaison de composés actifs selon la revendication 1, le composé actif supplémentaire (B) étant choisi dans le groupe constitué par (1.002) difénoconazole, (1.018) prothioconazole, (1.021) tébuconazole, (2.001) benzovindiflupyr, (2.002) bixafen, (2.005) fluopyram, (2.027) 3-(difluorométhyl)-1-méthyl-N-(1,1,3-triméthyl-2,3-dihydro-1H-indén-4-yl)-1H-pyrazole-4-carboxamide, (3.016) picoxystrobine, (3.020) trifloxystrobine, (5.004) chlorothalonil, (5.013) mancozeb et (5.018) propineb.

3. Combinaison de composés actifs selon la revendication 1 ou 2, le composé (A) choisi dans le groupe constitué par (I-1) N'-(2-chloro-5-méthyl-4-phénoxyphényl)-N-éthyl-N-méthylimidoformamide, (I-2) N'-[2-chloro-4-(2-fluorophénoxy)-5-méthylphényl]-N-éthyl-N-méthylimidoformamide, et des sels, des N-oxydes, des complexes métalliques ou

des stéréoisomères correspondants, étant le composé (I-1) N'-(2-chloro-5-méthyl-4-phénoxyphényl)-N-éthyl-N-méthylimidoformamide.

4. Combinaison de composés actifs selon la revendication 1 ou 2, le composé (A) choisi dans le groupe constitué par (I-1) N'-(2-chloro-5-méthyl-4-phénoxyphényl)-N-éthyl-N-méthylimidoformamide, (I-2) N'-[2-chloro-4-(2-fluorophénoxy)-5-méthylphényl]-N-éthyl-N-méthylimidoformamide, et des sels, des N-oxydes, des complexes métalliques ou des stéréoisomères correspondants, étant le composé (I-2) N'-[2-chloro-4-(2-fluorophénoxy)-5-méthylphényl]-N-éthyl-N-méthylimidoformamide.

5. Combinaison de composés actifs selon l'une des revendications 1 à 4, le rapport en poids de A:B étant dans la plage de 100:1 à 1:100, préférablement en un rapport en poids de 50:1 à 1:50, plus préférablement en un rapport en poids de 20:1 à 1:20, encore plus préférablement en un rapport en poids de 10:1 à 1:10.

6. Compositions comprenant des combinaisons de composés actifs selon l'une des revendications 1 à 5 et comprenant en outre des auxiliaires, des solvants, des supports, des tensioactifs ou des diluants.

7. Procédé pour la lutte contre des champignons phytopathogènes dans la protection de cultures, **caractérisé en ce que** des combinaisons de composés actifs selon l'une des revendications 1 à 5 ou des compositions selon la revendication 6 sont appliquées aux graines, au végétal, aux fruits de végétaux ou au sol sur lequel le végétal croît ou est censé croître.

8. Utilisation de combinaisons de composés actifs selon l'une des revendications 1 à 5 ou de compositions selon la revendication 6 pour la lutte contre des champignons phytopathogènes indésirables dans la protection de cultures.

9. Utilisation de combinaisons de composés actifs selon l'une des revendications 1 à 5 ou de compositions selon la revendication 6 pour le traitement de graines, de graines de végétaux transgéniques et de végétaux transgéniques.

10. Graines comprenant des combinaisons de composés actifs selon l'une des revendications 1 à 5 ou des compositions selon la revendication 6.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2000046184 A
- WO 2003093224 A
- WO 2007031512 A
- WO 2007031513 A
- WO 2007031523 A
- WO 2007031524 A
- WO 2007031526 A
- WO 2007031527 A
- WO 2007061966 A
- WO 2008101682 A
- WO 2008110279 A
- WO 2008110280 A
- WO 2008110281 A
- WO 2008110312 A
- WO 2008110313 A
- WO 2008110314 A
- WO 2009110315 A
- WO 2008128639 A
- WO 2009156098 A
- WO 2009156074 A
- WO 2010086118 A
- WO 2012025450 A
- WO 2012090969 A
- WO 2014157596 A
- WO 2007031508 A
- WO 2007093227 A
- WO 2003024219 A
- WO 2004037239 A
- WO 2005089547 A
- WO 2005120234 A
- WO 2012146125 A
- WO 2013136275 A
- WO 2014037314 A
- EP 3011832 A
- US 20110082036 A
- WO 2005094582 A
- WO 2007031507 A
- WO 2015121231 A
- WO 201437314 A
- WO 2009140624 A
- WO 200046184 A
- US 4272417 A
- US 4245432 A
- US 4808430 A
- US 5876739 A
- US 20030176428 A1
- WO 2002080675 A
- WO 2002028186 A
- WO 2009110313 A


### Non-patent literature cited in the description


- Database. 564025
- The Pesticide Manual. British Crop Protection Counci
- Chemie der Pflanzenschutz- und Schadlings-bekampfangsmittel. **R. WEGLER.** Chemistiy of the Crop Protection Compositions and Pesticides. Springer Verlag, 1970, vol. 2, 401-412